Europäisches Patentamt

European Patent Office

Office européen des brevets

(19)

(11) **EP 0 702 488 A1**

(12) **DEMANDE DE BREVET EUROPEEN**

(43) Date de publication:
20.03.1996 Bulletin 1996/12

(51) Int Cl.6: **H04N 5/44**

(21) Numéro de dépôt: **95402087.1**

(22) Date de dépôt: **15.09.1995**

(84) Etats contractants désignés:
**DE GB**

(30) Priorité: **19.09.1994 FR 9411131**

(71) Demandeurs:
• **FRANCE TELECOM**
**F-75015 Paris (FR)**
• **TELEDIFFUSION DE FRANCE**
**F-75015 Paris (FR)**

(72) Inventeurs:
• **Mau, Joel**
**F-35700 Rennes (FR)**
• **Soyer, Patrice**
**F-35000 Rennes (FR)**

(74) Mandataire: **Fréchède, Michel et al**
**Cabinet Plasseraud**
**84, rue d'Amsterdam**
**F-75440 Paris Cédex 09 (FR)**

(54) **Procédé et dispositif de conversion d'une image numérique de télévision du format entrelacé au format progressif et leurs applications**

(57) L'invention concerne un procédé et un dispositif de conversion d'une image numérique source de télévision du format entrelacé au format progressif. L'image numérique source formée de deux trames T1, T2 est découpée (A) en groupes de N sous-bandes de fréquences. Un filtrage (B) haute (HF) et basse (BF) fréquence des bandes de fréquences est effectué pour discriminer un signal d'information spatiale (BF) et temporelle (HF) représentatifs de la structure respectivement de l'évolution de la structure de l'image numérique source dans l'intervalle de temps inter-trame. Une recomposition (C) du spectre de fréquences de l'image numérique source est effectuée par traitement fréquentiel, par composition spectrale de la contribution de l'évolution de la structure de l'image pour engendrer un spectre de fréquences recomposé. Une image au format progressif est construite (D) à partir du spectre de fréquences recomposé dans le domaine image ou fréquentiel.

Application à la production d'images de télévision numérique au format progressif et à l'estimation de mouvement entre images.

FIG. 2.

**Description**

La présente invention concerne un procédé et un dispositif de conversion d'une image numérique de télévision, du format entrelacé au format progressif, et leurs applications.

Dans le domaine technique de la transmission et du traitement d'images numériques de télévision, on utilise actuellement deux formats de constitution de ces images à partir de pixels, le format entrelacé et le format progressif.

Dans le format entrelacé, l'image est formée par la superposition d'une première et d'une deuxième trame décalées d'un demi-pas, chaque trame comportant un certain nombre de lignes de pixels, chaque trame d'une image, formée par des pixels, étant ainsi représentative d'une information d'image relative à des instants séparés par l'intervalle de temps de séparation de trame δt. Ainsi, globalement, la première et la deuxième trame d'une image source au format entrelacé sont-elles porteuses, non seulement d'une même information relative à la structure de l'image, c'est-à-dire en fait de la scène statique représentée par cette image source, mais également d'une information temporelle de l'évolution relative de la structure de cette image entre les instants correspondant à l'intervalle de séparation de trame entre première et deuxième trame.

Dans le format progressif, l'image est formée par une succession de lignes de pixels. Globalement, l'image est alors porteuse d'une information relative à la seule structure de celle-ci, ou à la scène représentée par cette dernière. L'information temporelle de l'évolution relative de la structure de l'image est alors supportée par au moins deux images successives au format progressif.

Actuellement, le format entrelacé est largement utilisé dans le domaine technique du codage et de la transmission d'images de télévision numérique, en raison des débits de codage et de transmission d'information de ce type d'image, plus faible que dans le cas des images au format progressif.

Toutefois, les images au format progressif présentent une meilleure résolution verticale que les images au format entrelacé, et donc une meilleure définition, ces images pouvant de ce fait présenter un intérêt croissant.

Pour cette raison, l'opération de conversion d'images sources du format entrelacé au format progressif présente un intérêt majeur en vue de permettre d'assurer une compatibilité maximale entre matériels susceptibles d'utiliser des images à l'un ou l'autre format.

Actuellement, il existe plusieurs techniques de conversion d'images de télévision du format entrelacé au format progressif ou réciproquement.

Parmi les méthodes précitées, on peut distinguer les méthodes opérant dans le domaine image ou dans le domaine fréquentiel.

Les méthodes opérant dans le domaine image mettent en oeuvre des filtres linéaires spatiaux, notamment des filtres opérant un filtrage vertical sur deux ou quatre lignes de pixels et réalisant la moyenne de deux ou quatre pixels consécutifs dans la direction verticale d'une trame, filtres linéaires temporels opérant sur une ou plusieurs trames, ou filtres non-linéaires tels que les filtres Median Standard, Median Pondéré ou Median Hybride.

Les méthodes opérant dans le domaine fréquentiel mettent en oeuvre une manipulation de sous-bandes de fréquences issues d'une opération de transformée fréquentielle. Cette manipulation consiste essentiellement à interpoler chaque trame, tout en tenant compte uniquement de la seconde trame dans la même image.

L'ensemble des méthodes de filtrage de l'art antérieur précitées, dès lors qu'un niveau respectable de qualité est requis, nécessite de prendre en considération un nombre de trames supérieur à deux.

En particulier, la technique de manipulation en sous-bandes précitée ne peut guère être utilisée, pour un résultat comparable aux techniques de filtrage dans le domaine image sur un nombre de trames supérieur à deux, que lorsque l'amplitude du mouvement d'éléments d'image entre au moins deux trames n'est pas trop important.

En outre, tous les bancs de filtres actuellement connus dans les techniques de filtrage ne sont pas adaptés à la réalisation de la manipulation précitée. C'est le cas par exemple des bancs de filtres opérant un filtrage de transformée en cosinus discrète, TCD.

Enfin, les techniques de conversion du format entrelacé au format progressif utilisées actuellement dans les applications de studio de télévision présentent une certaine complexité, en raison du niveau de qualité recherché.

La présente invention a pour objet la mise en oeuvre d'un procédé et d'un dispositif de conversion d'une image numérique de télévision du format entrelacé au format progressif, permettant de remédier aux inconvénients des méthodes de conversion de format de l'art antérieur précitées.

Un autre objet de la présente invention est également la mise en oeuvre d'un procédé et d'un dispositif de conversion d'une image numérique de télévision du format entrelacé au format progressif par opérations simples sur des sous-bandes de fréquences obtenues par une transformée fréquentielle d'image, au moyen de bancs de filtres à transformée orthogonale modulée, filtres MOT.

Un autre objet de la présente invention est en particulier la mise en oeuvre d'un procédé et d'un dispositif de conversion d'une image numérique de télévision du format entrelacé au format progressif, dans lequel un processus de filtrage adaptatif est introduit afin de prendre en compte la prédominance de la nature spatiale ou temporelle de l'information contenue dans l'image, notamment par une discrimination de l'information temporelle contenue dans la première et la deuxième trame de l'image au format entrelacé, soumise au processus de conversion de format.

Un autre objet de la présente invention est également la mise en oeuvre d'un dispositif de filtrage en sous-bandes de fréquences plus particulièrement adapté à la mise en oeuvre des opérations en sous-bandes nécessaires à la mise en oeuvre du procédé et à la réalisation du dispositif de conversion du format entrelacé au format progressif d'une image numérique de télévision, objets de la présente invention.

Un autre objet de la présente invention est, compte tenu du passage au format progressif d'une image source au format entrelacé, de mesurer l'efficacité d'un schéma de codage vis-à-vis du codage d'une image au format entrelacé, d'une part, au codage d'une image au format progressif, d'autre part.

Un autre objet de la présente invention est enfin, compte tenu de l'information temporelle discriminée et obtenue à partir de la première et la deuxième trame d'une image courante et d'une image précédente au format entrelacé, grâce à la mise en oeuvre du procédé objet de l'invention, la mise en oeuvre d'un processus d'estimation/compensation de mouvement à une précision à la fraction de pixel de type hiérarchique particulièrement performant.

Le procédé et le dispositif de conversion d'une image numérique source de télévision constituée par les lignes entrelacées d'une première et deuxième trame successives, du format entrelacé au format progressif, objets de la présente invention, sont remarquables en ce qu'ils consiste à, respectivement permet de :

- effectuer une transformée fréquentielle par découpage en au moins un groupe de N bandes de fréquences de l'image numérique source dans la direction verticale de cette image de façon à engendrer, à partir des pixels constitutifs de cette image numérique source, une pluralité de signaux numériques représentatifs, dans chaque groupe de sous-bandes dans la direction verticale, du spectre de fréquences de l'image source ;

- effectuer en parallèle pour chaque groupe de sous-bandes dans la direction verticale un filtrage haute-fréquence et un filtrage basse-fréquence des signaux numériques représentatifs du spectre de fréquences de l'image numérique source de façon à discriminer un signal numérique d'information spatiale, engendré par le filtrage basse-fréquence, et un signal numérique d'information temporelle, engendré par le filtrage haute-fréquence, le signal d'information spatiale étant représentatif de la structure de l'image numérique source dans la première et la deuxième trame et le signal d'information temporelle étant représentatif de l'évolution de cette structure de l'image numérique source dans l'intervalle de temps séparant la première et la deuxième trame ;

- effectuer par traitement fréquentiel de chaque groupe de sous-bandes dans la direction verticale, au moins une recomposition du spectre de fréquences de l'image numérique source par composition spectrale de la contribution de cette évolution de la structure de l'image numérique source dans l'intervalle de temps séparant la première et la deuxième trame, pour engendrer un spectre de fréquences recomposé ;

- construire, suite au traitement fréquentiel, à partir du spectre de fréquences recomposé, dans le domaine image ou fréquentiel, une image au format progressif associée à au moins chaque trame.

Le procédé et le dispositif de conversion d'une image numérique source de télévision d'un format entrelacé au format progressif, objets de la présente invention, trouvent application à la prise, l'enregistrement ou le stockage, le codage, la transmission et la télédiffusion d'images de télévision numérique.

Ils trouvent également application de manière plus spécifique dans le domaine du codage, de la transmission et de la télédiffusion d'images de télévision numérique à des processus d'estimation/compensation de mouvement d'images, en raison de la discrimination du contenu et de la quantité de l'information temporelle entre trames de l'image numérique source au format entrelacé, information représentative de l'évolution de la structure de l'image numérique source dans l'intervalle de temps séparant ces trames.

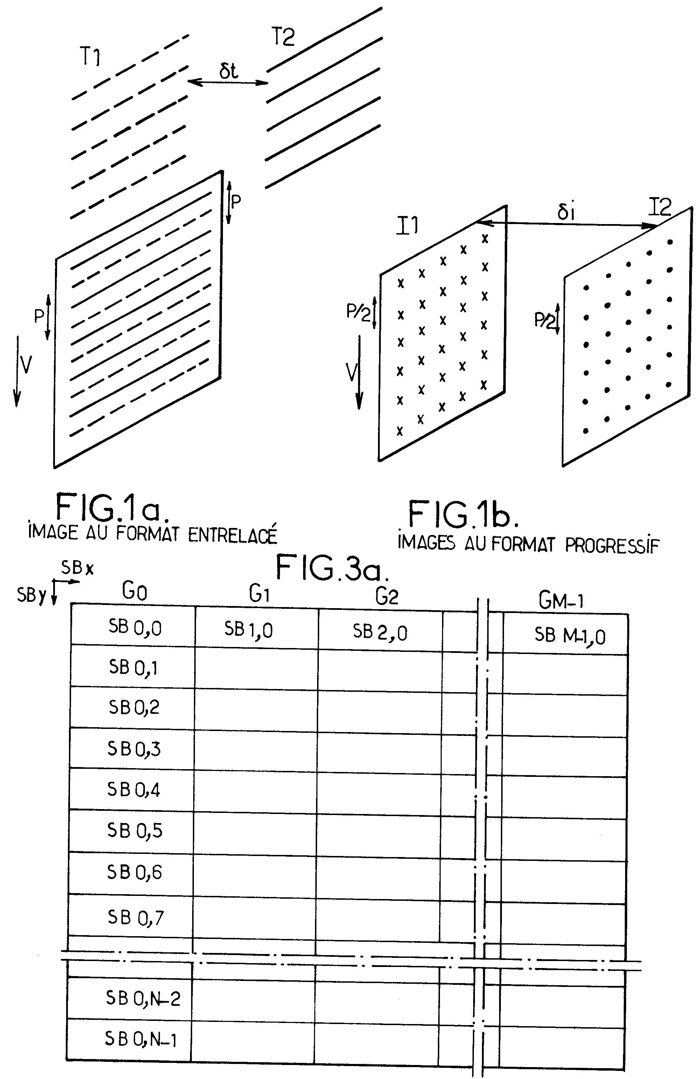

Ils seront mieux compris à la lecture de la description et à l'observation des dessins ci-après dans lesquels, outre les figures 1a et 1b illustrant la structure d'une image numérique source de télévision au format entrelacé respectivement d'images sources de télévision au format progressif, connues en tant que telles :

- la figure 2 représente, sous forme d'un organigramme, les étapes essentielles permettant la mise en oeuvre du procédé de conversion de format entrelacé/progressif, objet de la présente invention ;

- la figure 3a représente, de manière illustrative, l'espace des fréquences du spectre de fréquences découpé en MxN sous-bandes, M groupes de N sous-bandes disposées dans la direction verticale de l'image ;

- la figure 3b représente, de manière illustrative, un exemple de filtrage basse-fréquence respectivement haute-fréquence appliqué à chaque groupe de sous-bandes pour discriminer l'information spatiale respectivement temporelle contenue dans le groupe de sous-bandes considéré et en définitive dans les trames de l'image numérique source d'origine ;

- la figure 3c représente, dans un premier mode de réalisation, de manière illustrative, pour le groupe de sous-bandes considéré, d'une part, un premier spectre de fréquences intermédiaire représentatif de la structure de la première ou deuxième image au format progressif, et, d'autre part, d'un deuxième spectre de fréquences intermédiaire représentatif de l'évolution de la première image au format progressif ;

- la figure 3d représente, dans ce premier mode de réalisation, de manière illustrative, pour le groupe de sous-bandes considéré, d'une part, l'opération de recomposition d'un premier spectre de fréquences résultant représentatif de la première image au format progressif, et, d'autre part, une représentation symbolique du résultat de cette recomposition dans le domaine image de la première image au format progressif ;

- la figure 3e représente, dans ce premier mode de réalisation, de manière illustrative, pour le groupe de sous-bandes considéré, l'opération de recomposition d'un deuxième spectre de fréquences résultant représentatif de la deuxième image au format progressif, et, d'autre part, une représentation symbolique du résultat de cette recomposition dans le domaine image de la deuxième image au format progressif ;

- la figure 4a représente, dans un deuxième mode de réalisation, de manière illustrative, pour le groupe de sous-bandes considéré, l'opération de composition d'un spectre de fréquences représentatif d'une image duale entrelacée de l'image numérique source ;

- la figure 4b représente, dans ce même deuxième mode de réalisation, l'opération de reconstruction dans le domaine image, de la première et de la deuxième image au format progressif à partir de l'image numérique source et de l'image numérique duale au format entrelacé ;

- la figure 5 représente, pour un découpage d'une image numérique en NxN sous bandes, $M = N$, un diagramme de répartition de l'information spatiale et de l'information temporelle permettant d'introduire un critère de filtrage adaptatif haute et basse-fréquence en fonction du contenu de l'image ;

- les figures 6a, 6b et 6c représentent les éléments essentiels permettant la mise en oeuvre de filtres élémentaires pour assurer le filtrage haute et basse-fréquence et/ou l'inversion fréquentielle du signal filtré haute-fréquence ;

- les figures 7a et 7b sont relatives à un premier respectivement deuxième mode de réalisation d'un dispositif de conversion d'une image numérique source de télévision du format entrelacé au format progressif, conforme à l'objet de la présente invention ;

- les figures 8a, 8b, 8c et 8d sont relatives à une application particulièrement avantageuse du procédé et du dispositif de conversion d'une image numérique source de télévision du format entrelacé au format progressif, à un processus d'estimation/compensation de mouvement à une précision fractionnaire de pixel de type hiérarchique d'une séquence d'images de télévision.

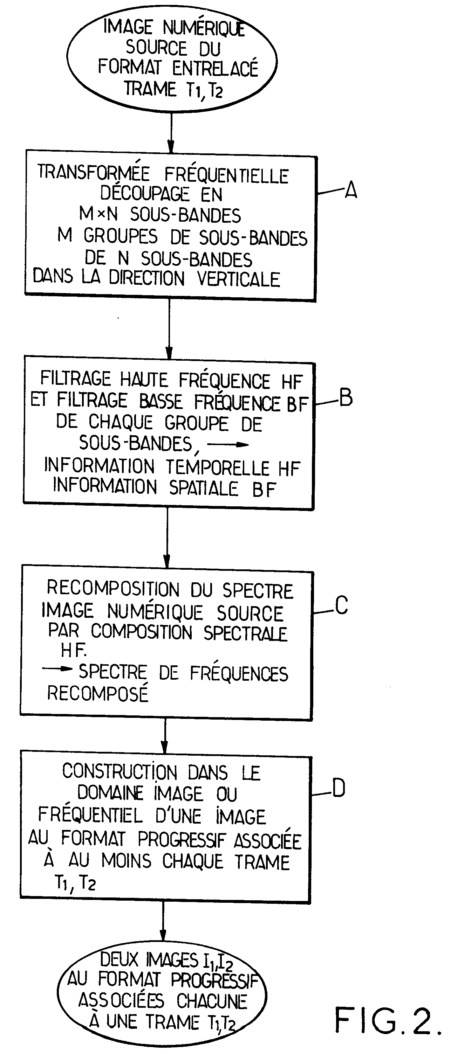

Une description plus détaillée de la mise en oeuvre du procédé et du dispositif de conversion d'une image numérique de télévision du format entrelacé au format progressif, conformes à l'objet de la présente invention, sera maintenant donnée en liaison avec la figure 2 et les figures suivantes.

Ainsi que représenté sur la figure 2 précitée, le procédé de conversion d'une image numérique source de télévision au format entrelacé et comportant deux trames T1, T2 consiste, pour chaque image d'une succession d'images, à effectuer dans une étape notée A une transformée fréquentielle par découpage en au moins un groupe de N bandes de fréquences de l'image numérique source dans la direction verticale de cette image. On comprend bien sûr que la transformée fréquentielle précitée est appliquée sur le signal numérique représentatif de l'image numérique source considérée, le signal numérique étant représentatif des pixels constitutifs de l'image numérique source. Le traitement par transformée fréquentielle permet d'engendrer une pluralité de signaux numériques représentatifs, dans chaque groupe de sous-bandes dans la direction verticale, du spectre de fréquences de l'image numérique source.

Par découpage en au moins un groupe de N sous-bandes de fréquences, on indique que le procédé objet de la présente invention peut avantageusement consister en un découpage bidimensionnel de l'image numérique source par création de MxN bandes de fréquences de l'image numérique source, N bandes de fréquences selon la direction verticale de l'image et M bandes selon la direction horizontale de cette image pour constituer en fait M groupes de N bandes de fréquences, ainsi qu'il sera ultérieurement décrit dans la description. On indique que, de manière non-limitative, le nombre M de groupes de N bandes de fréquences peut être pris égal à $M = 1$.

Ainsi que représenté en outre sur la figure 2 précitée, le procédé, objet de la présente invention, consiste ensuite à effectuer, en parallèle, pour chaque groupe de sous-bandes dans la direction verticale un filtrage haute-fréquence et un filtrage basse-fréquence des signaux numériques représentatifs du spectre de fréquences de l'image numérique source de façon à discriminer un signal numérique d'information spatiale, engendré par le filtrage basse-fréquence, et un signal numérique d'information temporelle engendré par le filtrage haute-fréquence.

Selon un aspect particulièrement avantageux du procédé de conversion d'image numérique source de télévision du format entrelacé au format progressif, objet de la présente invention, on indique que le signal d'information spatiale est représentatif de la structure de l'image numérique source dans la première et la deuxième trame T1, T2 et que le signal d'information temporelle est représentatif de l'évolution de cette structure, en particulier de l'évolution relative, de l'image numérique source dans l'intervalle de temps $\delta t$ séparant la première trame T1 et la deuxième trame T2.

Suite à l'opération B de filtrage haute et basse-fréquence de chaque groupe de sous-bandes verticales telle que représentée en figure 2, le procédé, objet de la présente invention, consiste ensuite à effectuer en une étape C par traitement fréquentiel dans chaque sous-bande de fréquences de chaque groupe de sous-bandes de fréquences dans la direction verticale, au moins une recomposition du spectre de fréquences de l'image numérique source par composition spectrale de la contribution de l'évolution de la structure de l'image numérique source dans l'intervalle de temps $\delta t$ séparant la première et la deuxième trame T1, T2 pour engendrer un spectre de fréquences recomposé. Par traitement fréquentiel dans chaque sous-bande de fréquences de chaque groupe de sous-bandes de fréquences dans la direction verticale, on entend une atténuation globale ou locale, totale, partielle ou nulle des fréquences contenues dans une ou plusieurs sous-bandes considérées.

Enfin, le procédé, objet de la présente invention, consiste en une étape D, suite à l'étape C de traitement fréquentiel précitée, à construire à partir du spectre de fréquences recomposé, dans le domaine image ou dans le domaine fréquentiel, une image au format progressif associée à au moins chaque trame T1, T2 de l'image numérique source.

On indique que la construction d'une image au format progressif associée à au moins chaque trame T1, T2 soit dans le domaine image, soit dans le domaine fréquentiel, peut être réalisée en fonction des opportunités de mise en oeuvre du procédé objet de la présente invention, la construction dans l'un ou l'autre domaine permettant d'obtenir un résultat équivalent consistant en deux images I1, I2 au format progressif associées chacune à une trame T1, T2 ainsi qu'il sera décrit ci-après dans la description.

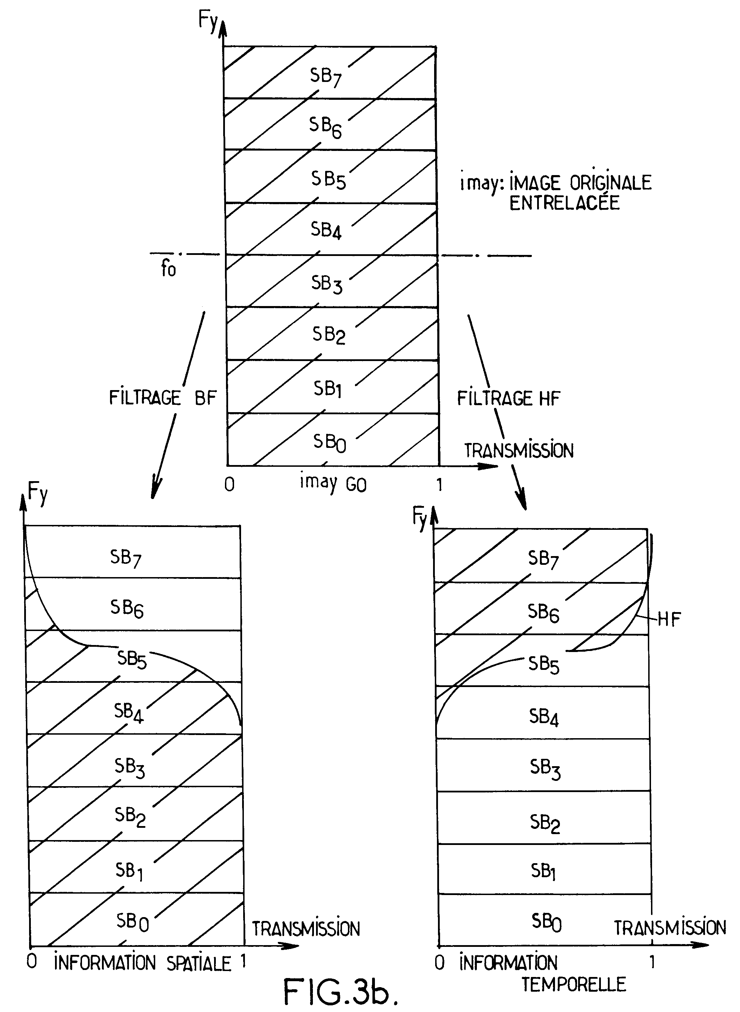

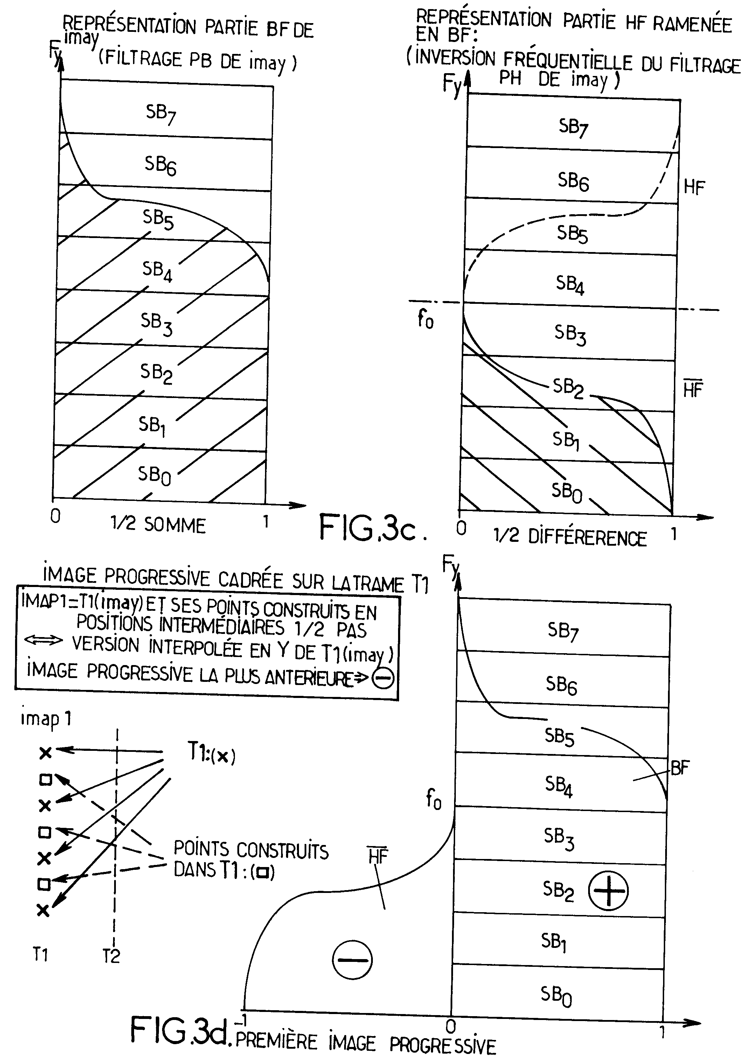

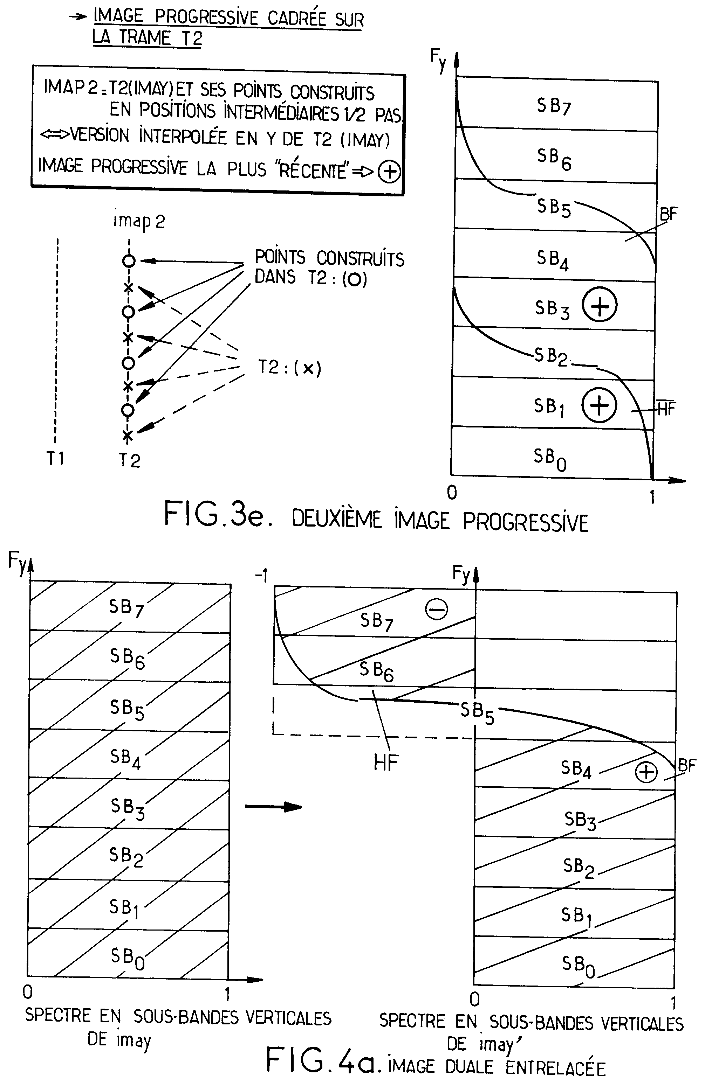

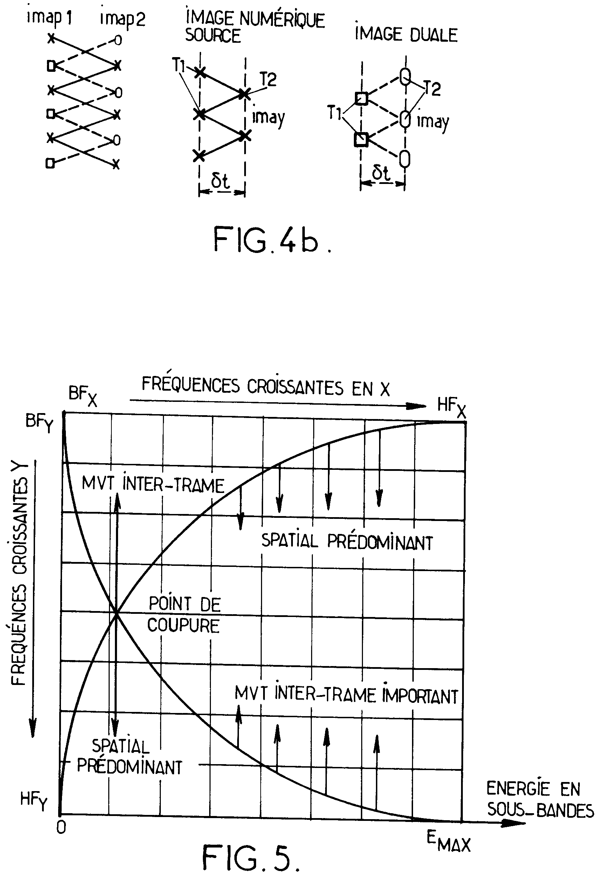

Les étapes de mise en oeuvre A, B, C, D du procédé, objet de la présente invention, seront maintenant décrites de façon plus détaillée en liaison avec les figures 3a, 3b, 3c et 3d, 3e dans un premier mode de réalisation, ainsi qu'en relation avec les figures 4a et 4b dans un deuxième mode de réalisation.

Ainsi qu'on l'a représenté en figure 3a, l'étape A de transformée fréquentielle en vue du découpage en MxN sous-bandes, permet d'obtenir M groupes de sous-bandes, notés $G_0$ à $G_{M-1}$, chaque groupe comportant N sous-bandes, notées $SB_{0,0}$ à $SB_{0,N-1}$ pour le groupe $G_0$ par exemple.

D'une manière générale, on indique que l'étape de transformée fréquentielle A et de découpage en MxN sous-bandes peut avantageusement être réalisée au moyen d'un filtrage par transformée orthogonale modulée, désigné par transformation MOT. Pour une description plus détaillée de ce type de transformation, on pourra utilement se reporter à l'article intitulé "*Regular M-Band Modulated Orthogonal Transforms*" publié par Joël MAU le 19.04.1994, CCETT, Département Codage d'Images et Etudes Psychovisuelles, BP 59, 35512 Cesson-Sévigné Cedex, France.

De manière avantageuse non limitative, on indique que les sous-bandes telles que $SB_{0,0}$ à $SB_{0,N-1}$ peuvent présenter la même largeur de bande. Toutefois, la décomposition en sous-bandes peut être réalisée de manière irrégulière pourvu que la largeur ou dimension des sous-bandes, selon la direction verticale de l'image, présente une symétrie par rapport à la fréquence centrale du spectre f0 de l'image numérique source dans la direction verticale.

Sur la figure 3b, on a représenté en partie supérieure un groupe de bandes de fréquences, tel que le groupe $G_0$ par exemple, la notation des sous-bandes relative à l'indice de groupe étant supprimée afin d'en faciliter la lecture. Dans la partie supérieure de la figure 3b, on indique que le nombre de groupes de sous-bandes a été ramené à 1 arbitrairement, M = 1, les opérations décrites ultérieurement dans la description sur le groupe de sous-bandes représenté à la partie supérieure de la figure 3b étant similaires sur chaque groupe lorsque plusieurs groupes sont réalisés.

Sur la figure 3b, on indique que les spectres de fréquences de chaque sous-bande, limités à huit dans l'exemple représenté sur la figure précitée, sont représentés en fréquences croissantes FY, selon la direction verticale de l'image en ordonnées, et en valeur de transmission selon l'axe des abscisses, la transmission totale ou absence d'atténuation étant représentée par la valeur 1 et l'atténuation totale par la valeur 0. Ainsi, compte tenu du principe de symétrie par rapport à la fréquence centrale f0 pour chaque groupe de sous-bandes, on indique que les sous-bandes peuvent avoir une largeur de bande, dans la direction verticale, différente, mais que les sous-bandes SB3 SB4, SB2 SB5, SB6 SB1 et SB0 SB7 ont même largeur de bande.

Ainsi qu'on l'a en outre représenté en figure 3b, l'étape B consiste à effectuer un filtrage haute-fréquence HF et un filtrage basse-fréquence BF de chaque groupe de sous-bandes, de façon à discriminer l'information spatiale et l'information temporelle de l'image numérique source.

On indique que les opérations de filtrage basse-fréquence et haute-fréquence peuvent être réalisées soit au moyen d'un filtrage fixe, un gabarit fixe de filtrage étant appliqué à l'ensemble des sous-bandes du groupe de sous-bandes pour réaliser le filtrage requis, ainsi que représenté sur la figure 3b en basse-fréquence, respectivement en haute-fréquence, soit, au contraire, un filtrage adaptatif dans lequel le gabarit de filtrage mis en oeuvre est adapté en fonction de la valeur d'un critère de décision calculé ainsi qu'il sera décrit ultérieurement dans la description.

D'une manière générale, on indique que le filtrage basse-fréquence, respectivement haute-fréquence précité a pour effet de dissocier l'information spatiale de l'information temporelle contenues toutes deux dans l'image numérique source entrelacée d'origine, cette image, pour les besoins de la description, et le signal numérique relatif à cette image, étant notés imay.

Le signal numérique source relatif à l'image numérique source entrelacée d'origine vérifie ainsi la relation (1) :

```
imay  =  (information spatiale)  + (information temporelle)
imay  =        partie BF         +         partie HF.
```

Les étapes C et D de recomposition du spectre image numérique source respectivement construction d'une image au format progressif associée à au moins chaque trame T1, T2, seront maintenant décrites dans un premier mode de réalisation consistant à effectuer cette construction dans le domaine fréquentiel, c'est-à-dire dans le domaine des sous-bandes.

Ainsi que représenté en figure 3c, l'opération de recomposition du spectre de l'image numérique source par composition spectrale consiste, ainsi que représenté à la partie gauche de la figure 3c, à effectuer la composition spectrale précitée compte tenu de la contribution de l'évolution de la structure de l'image numérique source.

L'opération de composition spectrale consiste à affecter le signal numérique d'information spatiale engendré par le filtrage basse-fréquence à la demi-somme des spectres de fréquences de la première et de la deuxième image à format progressif, pour engendrer un premier spectre de fréquences intermédiaire représentatif de la structure de la première ou de la deuxième image au format progressif. Ainsi, sur la figure 3c, en partie gauche, est représenté le signal basse-fréquence ou partie BF du signal numérique de l'image source imay, lequel constitue également un premier spectre de fréquences intermédiaire représentatif de la structure de la première ou de la deuxième image au format progressif. Plus particulièrement, ce spectre de fréquences est égal à la demi-somme des spectres de fréquences de la première et de la deuxième image à format progressif. L'opération de recomposition du spectre de l'image numérique source consiste également, ainsi que représenté en partie droite de la figure 3c, à inverser fréquentiellement le spectre du signal numérique d'information temporelle engendré par le filtrage haute-fréquence HF, pour engendrer un signal numérique d'information temporelle inversé fréquentiellement, noté $\overline{HF}$. Par l'opération d'inversion fréquentielle, on indique que le spectre du signal haute-fréquence HF est ainsi ramené en basse-fréquence pour constituer le spectre représenté par $\overline{HF}$ sur la figure 3c, partie droite de celle-ci. Le spectre de fréquences inversé $\overline{HF}$ est symétrique du spectre de fréquences HF par rapport à la fréquence centrale f0 du groupe de sous-bandes considéré.

L'inversion fréquentielle précitée étant effectuée, on indique que de manière particulièrement avantageuse, l'opération de recomposition, dans le premier mode de réalisation considéré, consiste alors à affecter le signal numérique d'information temporelle inversé fréquentiellement, c'est-à-dire le spectre $\overline{HF}$, à la demi-différence des spectres de fréquences de la première et de la deuxième image au format progressif, pour engendrer un deuxième spectre de fréquences intermédiaire représentatif de l'évolution de la première image au format progressif associé à la première trame en la deuxième image au format progressif associé à la deuxième trame. On comprend en particulier que l'opération d'affectation du spectre $\overline{HF}$ à la demi-différence des spectres de fréquences de la première et de la deuxième image au format progressif permet en fait de répartir sensiblement l'information temporelle, c'est-à-dire l'évolution de la structure de chaque image, entre l'intervalle de temps de séparation de trame δt sur l'une et l'autre image au format progressif.

Dans le premier mode de réalisation du procédé, objet de la présente invention, consistant en la construction dans le domaine fréquentiel d'une image au format progressif associée à au moins chaque trame T1, T2 de l'image numérique source d'origine, l'étape D consiste alors, ainsi que représenté en figures 3d et 3e, à recomposer un premier spectre de fréquences résultant représentatif de la première image au format progressif, ainsi que représenté en figure 3d, par combinaison linéaire du premier et du deuxième spectre de fréquences intermédiaires et simultanément à recomposer un deuxième spectre de fréquences résultant, représentatif de la deuxième image au format progressif, ainsi que représenté en figure 3e, par combinaison linéaire du premier et du deuxième spectre de fréquences intermédiaires. Le premier et le deuxième spectre de fréquences résultants forment le spectre de fréquences recomposé.

Sur la figure 3d, on a représenté l'étape de recomposition du premier spectre de fréquences résultant. Dans cette étape, on indique que la combinaison linéaire permettant de recomposer le premier spectre de fréquences résultant est formée par la différence du premier et du deuxième spectre de fréquences intermédiaires, le deuxième spectre de fréquences intermédiaire $\overline{HF}$ étant soustrait au premier spectre de fréquences intermédiaire BF, les opérations étant symbolisées par le signe + affecté au premier spectre de fréquences intermédiaire et par le signe - affecté au deuxième spectre de fréquences intermédiaire. L'opération précitée est représentée sur la partie droite de la figure 3d.

De manière générale, on indique que la différence précitée peut être une différence pondérée, les valeurs numériques ou signal numérique représentatifs du premier spectre de fréquences intermédiaire BF, respectivement du deuxième spectre de fréquences intermédiaire $\overline{HF}$ pouvant être affectées de coefficients de pondération arbitraires en fonction du type de scène et donc d'image source numérique progressive transmise.

Sur la partie gauche de la figure 3d, on a représenté symboliquement le résultat obtenu du fait de la recomposition du premier spectre de fréquences résultant, opération de recomposition représentée en partie droite de la figure 3d, la représentation de la partie gauche de cette même figure étant supposée effectuée dans le domaine image. La première image progressive ainsi obtenue est une image progressive synchronisée sur la première trame T1 de l'image numérique source au format entrelacé.

On indique que, conformément au procédé, objet de la présente invention, l'image progressive cadrée sur la première trame T1, cette image progressive étant notée imap1, n'est autre qu'une version interpolée dans la direction verticale de la première trame T1 de l'image numérique courante entrelacée imay.

La première image progressive imap1 est donc formée par la première trame T1 de l'image numérique source au format entrelacé et par les points construits en position intermédiaire au demi-pas de trame, du fait de la recomposition du premier spectre de fréquences résultant représenté en partie droite de la figure 3d. Les points reconstruits dans la première trame T1 sont symbolisés par un rectangle. Selon les conventions de représentation de la première et de la deuxième trame T1, T2, on indique que la première image progressive synchronisée sur la première trame T1 correspond à l'image progressive la plus antérieure.

En outre, ainsi qu'on l'a représenté en figure 3e, lors de l'étape de recomposition du deuxième spectre de fréquences résultant, la combinaison linéaire permettant de réaliser cette recomposition peut, de manière non-limitative, être formée par la somme du premier et du deuxième spectre de fréquences intermédiaires.

Sur la partie droite de la figure 3e, on a représenté d'une part, le premier spectre de fréquences intermédiaire BF affecté du signe +, et le deuxième spectre de fréquences intermédiaire $\overline{HF}$ également affecté du signe + afin de symboliser la somme du premier et du deuxième spectre de fréquences intermédiaires pour constituer, par recomposition, le deuxième spectre de fréquences résultant.

Sur la partie gauche de la figure 3e, on a représenté de manière symbolique, dans le domaine image, la deuxième image progressive synchronisée sur la deuxième trame T2 de l'image numérique source. La deuxième image progressive imap2 constitue en fait une version interpolée dans la direction verticale de la deuxième trame T2 de l'image numérique source imay.

Ainsi, la deuxième image progressive imap2 est formée par les points de la deuxième trame T2 de l'image numérique source et par les points reconstruits en position intermédiaire au demi-pas du fait de la composition, de l'addition dans ce cas, du premier et du deuxième spectre de fréquences intermédiaires BF, HF. Les points reconstruits sont représentés par des cercles sur la trame T2.

La deuxième image progressive imap2, synchronisée sur la deuxième trame T2, est désignée comme l'image progressive la plus récente.

Les étapes précédemment décrites de recomposition du premier et du deuxième spectre de fréquences résultants représentatifs de la première, respectivement de la deuxième image au format progressif, peuvent être justifiées de la manière ci-après (relation 2) :

$$\text{Partie BF} = [\text{information spatiale (imap1)} + \text{information spatiale (imap2)}]$$
$$= 1/2 \text{ Somme (partie commune aux 2 images progressives)}$$

$$\overline{\text{Partie HF}} = [\text{"information temporelle (imap2)"} - \text{"information temporelle (imap1)"}]$$
$$= 1/2 \text{ Différence (évolution des 2 images progressives).}$$

Dans cette relation, $\overline{\text{Partie HF}}$ désigne l'inversion fréquentielle de la partie HF du spectre, ramenée vers les basses-fréquences. Les annotations "" traduisent la nécessité d'une interprétation en ce sens des termes ainsi distingués. Par suite, la construction précédemment décrite, opérée dans le domaine des sous-bandes verticales à partir des spectres Demi-Somme et Demi-Différence, permet d'obtenir les représentations fréquentielles des deux images progressives.

Bien entendu, on comprend qu'afin d'obtenir, dans le domaine image, la première imap1 et la deuxième imap2 image progressive, le premier spectre de fréquences résultant et le deuxième spectre de fréquences résultant formant le spectre de fréquences recomposé peuvent alors être soumis à une transformation fréquentielle inverse, constitutive de l'étape D de construction, ainsi qu'il sera décrit ultérieurement dans la description.

Une description plus détaillée d'un deuxième mode de réalisation du procédé de conversion du format entrelacé au format progressif d'une image numérique source au format entrelacé, objet de la présente invention, sera maintenant donnée en liaison avec les figures 4a et 4b dans le cas où la construction, c'est-à-dire l'étape D précédemment décrite dans la description, est effectuée dans le domaine image proprement dit.

Dans ce deuxième mode de réalisation, on indique que l'étape C consistant à effectuer une recomposition du spectre image numérique source, consiste à composer dans le domaine fréquentiel, ainsi que représenté en figure 4a, en partie droite de celle-ci, pour chacun des groupes de sous-bandes dans la direction verticale, un spectre de fréquences résultant représentatif d'une image duale entrelacée de l'image numérique source entrelacée.

Dans ce cas, et selon une caractéristique avantageuse du procédé, objet de la présente invention, le spectre de fréquences résultant, ainsi que représenté en partie droite de la figure 4a, est obtenu par différence du signal numérique d'information spatiale, représenté par le spectre en sous-bandes BF, affecté du signe +, engendré par le filtrage basse-fréquence et du signal numérique d'information temporelle, spectre HF, affecté du signe -, engendré par le filtrage haute-fréquence. Ce spectre de fréquences résultant est représentatif de l'image numérique duale de l'image numérique source entrelacée.

Ce deuxième mode de réalisation du procédé, objet de la présente invention, s'appuie en fait sur la construction préalable de l'image duale de l'image numérique source entrelacée dans le domaine fréquentiel, c'est-à-dire dans le domaine des sous-bandes, et peut être justifié de la manière ci-après.

Si l'on désigne par imay' l'image duale de l'image numérique source imay, l'image numérique source imay et l'image numérique duale imay' vérifient la relation entre leurs spectres respectifs (relation 3) :

```
imay  = (information spatiale)  +  (information temporelle)
imay  =        ima_spat         +         ima_temp


imay' = (information spatiale)  -  (information temporelle)
imay' =        ima_spat         -         ima_temp
```

Dans la relation 3 précitée, on indique que ima_spat désigne l'information spatiale de l'image numérique source alors que ima_temp désigne l'information temporelle contenue dans cette même image source au format entrelacé.

La relation liant le spectre de l'image duale imay' aux informations spatiale et temporelle précitées traduit en fait le déphasage temporel de l'image duale et de l'image source au format entrelacé.

En exprimant l'information temporelle en fonction de l'information ou spectre de l'image numérique source imay et de l'information spatiale ima_spat, le spectre imay' de l'image duale de l'image numérique source s'écrit selon la relation (4) :

$$imay' = 2*ima\_spat - imay.$$

L'opération d'obtention du spectre de l'image duale imay' à partir du spectre de l'image numérique source imay, est représentée en figure 4a. Cette figure illustre exactement la différence des deux spectres dans le domaine des hautes-fréquences correspondant au décalage temporel d'un intervalle de séparation de trame $\delta t$ de ces images dans le domaine image.

Contrairement au premier mode de réalisation du procédé objet de la présente invention, dans le deuxième mode de réalisation présentement décrit, la construction des images progressives est effectuée après retour dans le domaine image.

Dans ce cas, l'étape D du procédé objet de la présente invention, consiste alors à effectuer une transformée fréquentielle inverse du spectre de fréquences résultant, représentatif de l'image duale, pour engendrer l'image duale numérique dans le domaine image au format entrelacé.

Il est alors possible d'interpréter l'opposition de phase entre l'image numérique source et l'image numérique duale telle que représentée en figure 4a dans le domaine fréquentiel, par un simple décalage de position d'un demi-pixel suivant la direction verticale de trame des images.

Le procédé objet de la présente invention, dans le deuxième mode de réalisation, consiste alors à reconstruire, ainsi que représenté en figure 4b, à partir de l'image numérique source et de l'image numérique duale, par décalage de position d'un demi-pixel suivant la direction verticale, une image au format progressif associée à chacune des première et deuxième trames T1, T2.

Ainsi qu'on l'a représenté de manière illustrative en figure 4b, l'élaboration des deux images progressives imap1, imap2 dans le domaine image est obtenue à partir des considérations précédentes en considérant, pour l'image progressive 1, imap1, les points situés sur la première trame T1, de l'image numérique source et de l'image duale de l'image numérique source, toutes deux au format entrelacé, et pour la deuxième image progressive, imap2, les points situés sur la deuxième trame T2 des deux images précitées. Le résultat, obtention de la première et de la deuxième image progressive imap1, imap2 est bien entendu équivalent au résultat du premier mode de réalisation.

Dans le premier et le deuxième mode de réalisation du procédé, objet de la présente invention, précédemment décrits, les processus de filtrage en basse-fréquence, respectivement en haute-fréquence, sont mis en oeuvre à partir d'éléments de filtrage utilisant un gabarit de filtre unique fixe.

Une variante améliorée des premier et deuxième modes de réalisation précités peut cependant être réalisée afin de distinguer effectivement l'information temporelle HF due au seul mouvement des structures ou éléments d'image d'une information de nature haute-fréquence d'origine spatiale résultant de mouvements relativement lents ou d'amplitude modérée d'éléments d'images très découpés. En effet, un filtrage fixe appliqué à une image sans mouvement, mais riche en contours, conduit à discriminer le spectre basse-fréquence du spectre haute-fréquence spatiale alors que l'intégralité du spectre aurait dû être conservée, la contribution de l'information temporelle au spectre haute-fréquence étant absente dans ce cas particulier.

Afin de réduire le risque précité, risque de confusion entre la haute fréquence d'origine spatiale avec l'information de mouvement proprement dit, il est avantageux, conformément à un aspect particulier du procédé objet de la présente invention, de mettre en oeuvre un filtrage adaptatif afin de réaliser, tant le filtrage basse-fréquence que le filtrage haute-fréquence.

Ainsi, un processus de conversion plus élaboré, conformément à un aspect avantageux du procédé objet de la présente invention, prend en compte l'information liée aux sous-bandes elles-mêmes et permet selon un critère de décision de détection spatiale/temporelle du contenu de l'image, en particulier de chaque sous-bande, d'opérer un choix entre filtrage fixe ou adaptatif selon le diagramme représenté en figure 5.

Dans ce mode de réalisation particulier des premier et deuxième modes de réalisation précédemment décrits du procédé objet de la présente invention, il est possible de manière non-limitative, d'effectuer un découpage en MxN sous-bandes de fréquences de l'image numérique source, N bandes de fréquences selon la direction verticale et M bandes selon la direction horizontale de cette image, afin de constituer M groupes de N bandes de fréquences.

Dans un mode de réalisation effectif M = N = 8. Dans ces conditions, le filtrage basse et haute-fréquence est un filtrage de type adaptatif réalisé suivant un critère de décision de détection spatio-temporelle du contenu inter- et/ou intra-images numériques sources entrelacées.

Ce mode opératoire consistant à introduire un filtrage adaptatif est justifié par le fait que, ainsi que représenté en figure 5, la décomposition en sous-bandes d'un signal d'image numérique source au moyen d'un filtrage par transformée orthogonale modulée MOT permet de différencier dans cette représentation fréquentielle deux zones essentielles :

- une zone de répartition d'énergie dans les basses-fréquences pour l'information spatiale ;

- une zone de répartition d'énergie dans les hautes-fréquences correspondant au mouvement inter-trames.

Cette dernière zone est d'autant plus prononcée que le nombre de parties en mouvement de l'image est important.

Le positionnement relatif de ces deux zones dans le spectre bidimensionnel, spectre des fréquences dans la direction verticale, noté HFY, et spectre de fréquences dans la direction horizontale de l'image, spectre noté HFX, pour une image numérique source au format entrelacé, est représenté en figure 5 précitée.

La répartition, dans le spectre des sous-bandes, de l'énergie de mouvement et de l'énergie de l'information spatiale, respecte l'allure générale représentée en figure 5. Toutefois, si l'image présente un mouvement plus prononcé entre trames, davantage de sous-bandes dans les hautes-fréquences verticales sont porteuses d'énergie. On observe alors dans ce cas un déplacement du point de coupure en direction des basses-fréquences horizontales, ce déplacement correspondant à un recouvrement plus important des sous-bandes à hautes-fréquences verticales.

Au contraire, si l'image présente peu de parties en mouvement, l'énergie de son spectre en sous-bandes sera principalement concentré dans les basses-fréquences, ce qui provoque un déplacement du point de coupure dans le sens opposé.

Dans le cas extrême d'une image fixe issue d'une scène fixe par exemple, toute l'information y compris celle des hautes-fréquences verticales doit être interprétée comme information spatiale et le point de coupure se trouve alors déplacé tout en bas de l'illustration de la figure 5. En outre, selon la qualité de la définition de l'image sur la direction horizontale de l'image, ce point de coupure est déplacé en conséquence vers les basses ou les hautes-fréquences dans la direction horizontale.

Si on considère la décomposition d'une image progressive en sous-bandes dans le domaine des fréquences, une forte diminution de l'énergie des hautes-fréquences verticales doit donc être observée, puisque dans cet exemple le mouvement inter-trames est absent. Il importe donc en conséquence de tenir compte des observations précédentes, lesquelles permettent d'élaborer un critère de décision sur le choix du mode de filtrage, adaptatif ou non-adaptatif, à appliquer pour la conversion du format entrelacé au format progressif.

Le mode de filtrage adaptatif ainsi défini permet donc de rendre considérablement plus performante la technique de conversion de format entrelacé/progressif puisque ce mode de filtrage tient compte de l'information présente dans les sous-bandes du découpage en sous-bandes, c'est-à-dire de la spécificité des caractéristiques de chacune des images traitées en fonction de la complexité de leur contenu et de l'énergie de mouvement contenue dans celles-ci.

Dans le cas d'une décomposition en 8 x 8 sous-bandes par exemple, ainsi que mentionné précédemment, il est possible de définir, quel que soit le type de critère utilisé, cinq modes possibles de filtrage, c'est-à-dire cinq types de gabarit spécifiques, lesquels seront commutés en fonction du critère de décision précité.

Dans les modes de filtrage utilisés, le numéro affecté à chaque mode correspond à la position du point de coupure retenu sur les sous-bandes verticales après calcul du critère de décision sur considérations énergétiques. La position du point de coupure coïncide ainsi avec un type de filtrage spécifique :

- <u>mode 4</u> : filtrage dans la trame de type basse-fréquence BF, les quatre sous-bandes de fréquences les plus basses étant transmises intégralement ;

- <u>mode 8</u> : filtrage dit "pleine-bande", les huit sous-bandes verticales étant transmises intégralement ;

- <u>modes 5, 6 et 7</u> : mode de filtrage intermédiaire, certaines des sous-bandes au-delà de la fréquence centrale n'étant pas transmises.

Afin de permettre la mise en oeuvre du procédé de conversion d'une image numérique de télévision du format entrelacé au format progressif, objet de la présente invention, dans l'un ou l'autre des modes de réalisation précédemment décrits, il est bien entendu nécessaire de mettre en oeuvre des dispositifs de filtrage particulièrement adaptés permettant d'effectuer un filtrage fin dans les sous-bandes obtenues, suite à la décomposition fréquentielle en sous-bandes.

Toute opération effectuée dans le domaine des sous-bandes peut en effet s'accompagner, lors de la phase de reconstruction, de phénomènes de rebond sur les contours ou de fréquences parasites perturbant le signal, ces phénomènes parasites étant liés au recouvrement partiel de sous-bandes voisines. Des techniques de filtrage dans les sous-bandes doivent alors être utilisées afin de limiter ces défauts gênants lors de la mise en oeuvre d'une opération de filtrage d'un signal numérique.

Ces techniques permettent d'éliminer mutuellement les composantes de pollution afin de faire disparaître ces phénomènes à l'issue de la phase de reconstruction du signal.

Il est donc indispensable d'attribuer à chaque sous-bande un filtre élémentaire au gabarit bien défini, respectant les conditions aux limites directement liées à l'allure du filtre global appliqué sur le spectre en sous-bandes du signal.

Lors de l'élaboration de ces filtres élémentaires, il est également indispensable de tenir compte de l'inversion fréquentielle des sous-bandes d'ordre impair $SB_{2n+1}$ provoquée par le sous-échantillonnage dans le processus de décomposition, c'est-à-dire dans la mise en oeuvre du filtrage de type MOT. En effet, pour ces sous-bandes, tout filtre passe-haut devient passe-bas pour la version inversée fréquentiellement et respectivement, tout filtre passe-bas se transforme en un filtre passe-haut.

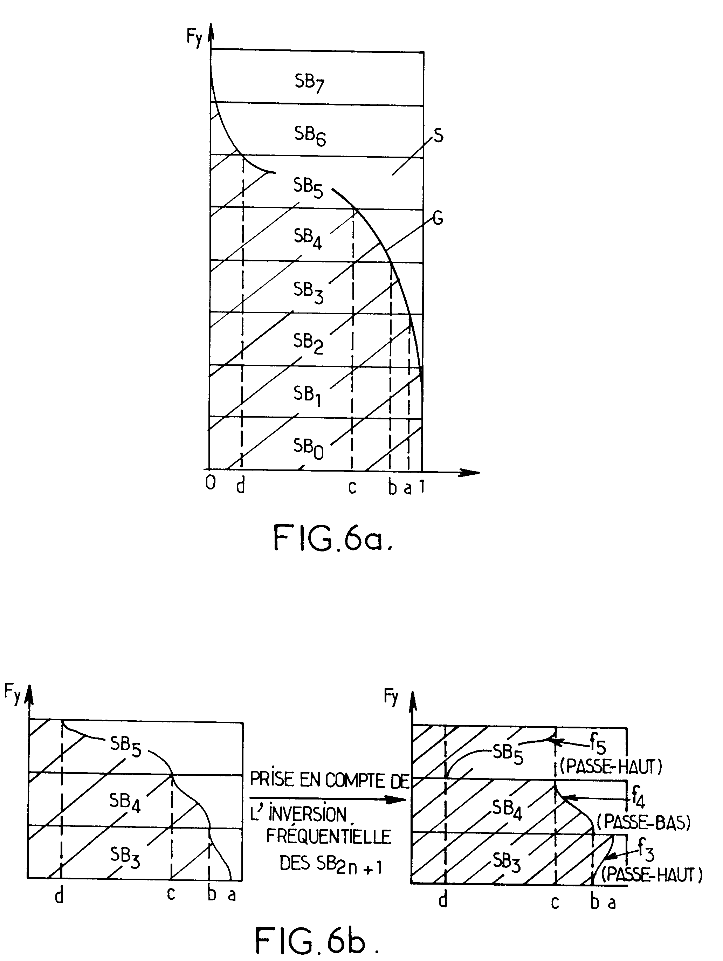

Compte tenu de l'ensemble de ces considérations, un objet de la présente invention est également la mise en oeuvre d'un dispositif de filtrage d'un signal numérique présentant un spectre de fréquences S suivant un gabarit de filtrage G tel que représenté sur la figure 6a. On comprend bien sûr que le spectre de fréquences S est celui du signal dans le groupe de sous-bandes considéré, c'est-à-dire l'un des groupes de la décomposition en MN sous-bandes par exemple.

Le dispositif de filtrage comprend alors un banc de filtres de transformée fréquentielle du signal numérique en un nombre N de sous-bandes verticales adjacentes successives, couvrant le spectre de fréquences S du signal numérique. Ce banc de filtres est, ainsi que précédemment mentionné dans la description, un banc de filtres MOT permettant de réaliser la décomposition précitée pour obtenir le spectre de fréquences S formé par le groupe de sous-bandes.

En outre, au circuit de bancs de filtres de transformée fréquentielle précités, est associé un module de filtrage formé par une pluralité de filtres élémentaires pour chaque sous-bande. De préférence, chaque filtre élémentaire est formé par un filtre à nombre impair de coefficients. Chaque filtre élémentaire est formé par la combinaison d'un filtre passe-bas et d'un filtre passe-haut, pondérés chacun par la valeur limite inférieure, respectivement supérieure, d'atténuation de filtrage global G au voisinage de la limite inférieure et supérieure de la sous-bande correspondante. Ainsi, pour la sous-bande SB3 du spectre S représenté en figure 6a, la valeur limite inférieure respectivement supérieure d'atténuation est notée a,b pour la sous-bande SB4, elle est notée b,c, et pour la sous-bande SB5, c,d, ainsi que représenté en figure 6b.

Dans le cas d'une réalisation à partir de bancs de filtres à trois coefficients, on indique que le filtre passe-bas est un filtre du type 1/p, 1/q, 1/p alors que le filtre passe-haut est un filtre du type -1/r, 1/s, -1/r, p, q, r et s étant des entiers supérieurs à 1.

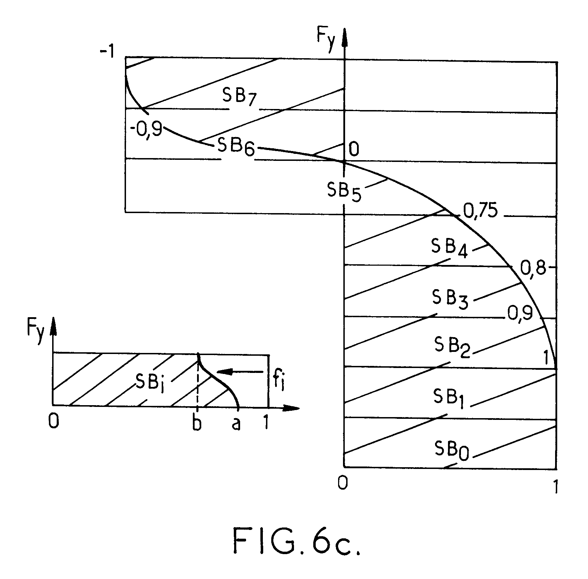

Dans le cas particulier de réalisation du filtre global de gabarit G appliquée à l'image numérique source entrelacée pour obtenir le spectre de l'image duale de l'image numérique source entrelacée, ainsi que représenté en figure 4a, partie droite de celle-ci, et pour les valeurs numériques représentées à titre d'exemple en figure 6c correspondante, pour toute sous-bande de fréquences notée SBi, pour laquelle les valeurs limites inférieure et supérieure d'atténuation du filtrage global G au voisinage de la limite inférieure et supérieure de la sous-bande correspondante sont a et b, les coefficients du filtre choisi étant obtenus pour p = 4, q = 2, r = 4, s = 2, chaque filtre élémentaire $f_i$ est donné par la relation (5) du point de vue de sa fonction de transfert :

$$f_i = a.\,(1/4 \ 1/2 \ 1/4) + b.(-1/4 \ 1/2 \ -1/4) = (1/4.[a-b] \ 1/2.[a+b] \ 1/4.[a-b])$$

Les valeurs numériques de chaque filtre f0 à f7 vérifient alors la relation (6) :
f0 = (0 1 0) ; f1 = (0 1 0) ; f2 = (1/40 38/40 1/40) ; f3 = (1/40 34/40 1/40)
f4 = (1/80 62/80 1/80) ; f5 = (3/16 6/16 3/16) ; f6 = (9/40 -18/40 9/40) f7 = (1/40 -38/40 1/40).

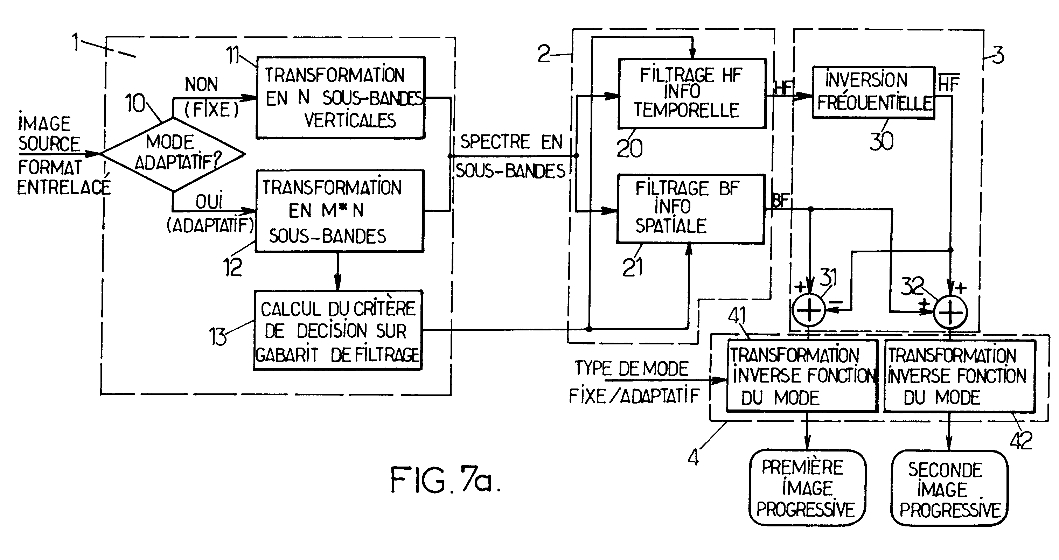

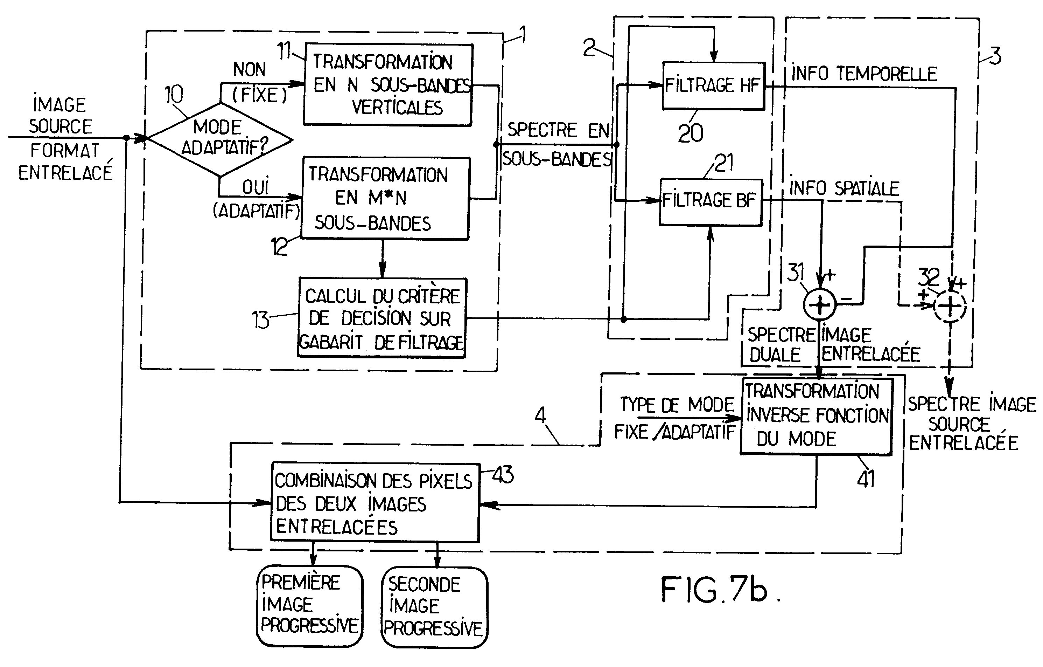

Une description plus détaillée d'un dispositif de conversion d'une image numérique de télévision du format entrelacé au format progressif, objet de la présente invention, sera maintenant donnée en liaison avec les figures 7a et 7b, dans deux modes de réalisation différents permettant la mise en oeuvre du procédé, objet de la présente invention, dans les premier, respectivement deuxième modes de réalisation, précédemment décrits dans la description.

Dans les figures 7a et 7b, on indique bien sûr que les mêmes références représentent les mêmes éléments.

Les deux modes de réalisation représentés en figure 7a comportent notamment un module 1 de transformée fréquentielle par découpage en au moins un groupe de N sous-bandes de fréquences de l'image numérique source dans la direction verticale de cette image, de façon à engendrer à partir de pixels constitutifs de l'image numérique source une pluralité de signaux numériques représentatifs dans chaque groupe de sous-bandes, dans la direction verticale, du spectre de fréquences de l'image numérique source précitée. L'image numérique source est bien entendu au format entrelacé.

En outre, un module 2 de filtrage haute-fréquence et basse-fréquence est prévu, lequel reçoit les signaux numériques représentatifs du spectre de fréquences de l'image numérique source délivrés par le module 1 de transformée fréquentielle. Le module 2 de filtrage haute et basse-fréquence permet de discriminer un signal numérique d'information spatiale et un signal numérique d'information temporelle engendrés par le filtrage basse, respectivement haute-fréquence. Ces signaux sont représentés par BF, HF respectivement. Ils sont représentatifs de la structure de l'image numérique source dans la première et la deuxième trames, respectivement de l'évolution de cette structure de l'image numérique source dans l'intervalle de temps séparant la première et la deuxième trame T1, T2 ainsi que mentionné précédemment dans la description.

Un module de recomposition spectrale du spectre de fréquences de l'image numérique source par traitement fréquentiel 3 est prévu, lequel permet, par composition spectrale de la contribution de l'évolution de la structure de l'image source, signal numérique HF, et du signal d'information spatiale, signal numérique BF, d'engendrer un spectre de fréquences recomposé, ainsi qu'il sera décrit ci-après dans la description.

Un module 4 de reconstruction dans le domaine image ou fréquentiel à partir du spectre de fréquences recomposé est prévu, pour assurer la reconstruction d'une image au format progressif associée à au moins chaque trame, une image étant reconstruite pour la trame T1, respectivement pour la trame T2.

De manière plus spécifique, en liaison avec la figure 7a et/ou la figure 7b, on indique que le module 1 de transformée fréquentielle peut comporter un circuit 10 de commutation recevant sur une entrée le signal d'image source entrelacée représentatif de l'image numérique source entrelacée de télévision, et délivrant sur commutation, sur critère de choix du mode de filtrage, adaptatif ou non-adaptatif, le signal d'image source sur une première, respectivement une deuxième borne de sortie. On comprend bien sûr que le circuit 10 est représenté sous forme d'un test car il peut consister par exemple en un circuit d'aiguillage numérique, lequel, à partir d'une variable de commutation de type binaire, permet d'aiguiller le signal d'entrée, signal d'image numérique source, vers l'une ou l'autre des sorties.

En outre, des modules de filtrage par transformée orthogonale modulée de type MOT, filtrage effectué dans les conditions précédemment mentionnées dans la description, modules référencés 11 respectivement 12, reçoivent le signal image source délivré par l'une des bornes de sortie du module de commutation 10 et permettent chacun d'effectuer le découpage en sous-bandes de fréquences, par exemple en un groupe de N sous-bandes verticales en ce qui concerne le module 11, ces N sous-bandes constituant un seul et unique groupe de sous-bandes, soit pour le module 12 en M groupes de N sous-bandes ainsi que décrit précédemment dans la description. Dans les deux cas, le module 11 ou le module 12 délivre un signal numérique représentatif du spectre de fréquences de l'image numérique source.

En outre, le module 1 de transformée fréquentielle comporte avantageusement un module 13 de calcul d'un critère de décision sur le gabarit de filtrage appliqué au circuit de filtrage haute-fréquence et basse-fréquence en fonction du mode adaptatif ou non-adaptatif choisi. Le module 13 de calcul du critère de décision reçoit un signal représentatif de la répartition de l'énergie du spectre de fréquences en sous-bandes de fréquences, ce signal correspondant par exemple à un signal fonction de la position du point de coupure dans l'espace bidimensionnel de fréquence des sous-bandes telles que représentées en figure 5. Le module 13 de calcul du critère de décision permet par exemple, en fonction de la valeur du signal de représentation de la répartition d'énergie, de délivrer un signal numérique de commande du module de filtrage haute et basse-fréquence 2, ainsi qu'il sera décrit ci-après.

Le module de filtrage haute et basse-fréquence 2 peut comporter, ainsi que représenté en figure 7a ou 7b, un module de filtrage basse-fréquence 20 et un module de filtrage haute-fréquence 21 recevant en parallèle le signal numérique représentatif du spectre de fréquence de l'image numérique source entrelacée délivrée par le module de transformée fréquentielle 1. Le module de filtrage haute-fréquence 20 et le module de filtrage basse-fréquence 21 re-

EP 0 702 488 A1

çoivent sur une entrée de commande le signal numérique de commande délivré par le circuit de calcul 13 du critère de décision sur le gabarit de filtrage. On comprend bien sûr qu'en fonction de la position du point de coupure dans l'espace de fréquences précité, le signal numérique de commande du module de filtrage haute-fréquence 20 et du module de filtrage basse-fréquence 21 permet de commuter l'un et l'autre des modules de filtrage 20 et 21 précités sur les valeurs de gabarit telles que définies précédemment dans la description par les modes de filtrage 4, 8 et 5, 6, 7 précédemment cités.

Dans le cas d'une reconstruction des images au format progressif dans le domaine fréquentiel, ainsi que représenté en figure 7a, le module 3 de recomposition spectrale du spectre de fréquences de l'image numérique source, par traitement fréquentiel, comprend un module 30 d'inversion fréquentielle recevant le signal numérique d'information temporelle HF délivré par le module de filtrage 20 haute-fréquence et délivre un signal numérique d'information temporelle inversée $\overline{HF}$ ramené dans le domaine basse-fréquence. Un module soustracteur 31 et un module sommateur 32 sont prévus afin d'assurer la recomposition spectrale précitée. Le module soustracteur 31 reçoit le signal numérique d'information spatiale BF délivré par le module de filtrage basse-fréquence 21, ainsi que le signal d'information temporelle inversée $\overline{HF}$ délivré par le module d'inversion fréquentielle 30. Il délivre un signal numérique représentatif du spectre de fréquences de la première image au format progressif. Le module sommateur 32 reçoit le signal numérique d'information spatiale BF délivré par le module de filtrage basse-fréquence 21 ainsi que le signal numérique d'information temporelle inversée $\overline{HF}$ délivré par le module d'inversion 30. Il délivre un signal numérique représentatif du spectre de fréquences de la deuxième image au format progressif. Ainsi, les signaux numériques représentatifs du spectre de fréquences de la première image et de la deuxième image au format progressif, délivrés par le circuit soustracteur 31 et par le circuit sommateur 32, constituent le spectre de fréquences recomposé, délivré par le module de recomposition 3.

Du point de vue du mode de réalisation, on indique que le module d'inversion fréquentielle 30 est constitué par un filtre dont les coefficients sont calculés, ainsi que mentionné précédemment dans la description en liaison avec les figures 6a, 6b et 6c par exemple. Le module soustracteur 31 et le module sommateur 32 peuvent alors être réalisés soit sous forme de circuits numériques dédiés, soit sous forme logicielle par exemple.

Enfin, le module de reconstruction 4 dans le domaine fréquentiel d'une image au format progressif associée à chaque trame T1 respectivement T2, comporte par exemple, ainsi que représenté en figure 7a, dans le cas du premier mode de réalisation, un module 41 et un module 42 de transformée fréquentielle inverse, c'est-à-dire un banc de filtres de transformée orthogonale modulée de type MOT, permettant d'assurer une reconstruction parfaite des images au format progressif dans le domaine image. Pour une réalisation de ce type de bancs de filtres, on pourra se reporter utilement à l'article publié par Joël MAU, précédemment mentionné dans la description. Chaque module 41, 42 de transformée fréquentielle inverse délivre, à partir des signaux numériques représentatifs du spectre de fréquences recomposé, c'est-à-dire en fait à partir du signal numérique représentatif du spectre de fréquences de la première respectivement de la deuxième image au format progressif, les première et deuxième images au format progressif associées chacune à la trame T1, respectivement T2.

Dans le cas, au contraire, du deuxième mode de réalisation tel que représenté en figure 7b, c'est-à-dire dans le cas d'une reconstruction des images progressives dans le domaine image, le module 3 de recomposition spectrale du spectre de fréquences de l'image numérique source, par traitement fréquentiel, correspond au module 3 du mode de réalisation de la figure 7a dans lequel le module d'inversion fréquentielle 30 a été supprimé. Dans ce cas, le module soustracteur 31 et le module sommateur 32, bien que ce dernier module sommateur 32 ne soit pas indispensable, reçoivent respectivement le signal numérique haute-fréquence HF délivré par le module de filtrage haute-fréquence 20 directement, ainsi que le signal numérique basse-fréquence BF délivré par le module de filtrage basse-fréquence 21.

Le module soustracteur 31 délivre alors un signal numérique représentatif du spectre de fréquences d'une image duale entrelacée de l'image numérique source au format entrelacé.

Enfin, dans le cas du mode de réalisation de la figure 7b, le module 4 de reconstruction dans le domaine image d'une image au format progressif associée à au moins chaque trame, en particulier à la première T1 et la deuxième trame T2 respectivement, comporte un module 41 de transformée fréquentielle inverse, commandé en fonction du mode de filtrage, adaptatif ou non-adaptatif, choisi. Ce module reçoit le signal représentatif du spectre de fréquences de l'image duale et délivre dans le domaine image un signal représentatif de l'image duale numérique au format entrelacé. Un circuit de combinaison de pixels 43 est prévu, lequel reçoit le signal numérique représentatif de l'image numérique source au format entrelacé ainsi que, bien sûr, le signal représentatif de l'image numérique duale au format entrelacé, et permet par combinaison des pixels de ces deux images de délivrer une première et une deuxième image progressive associée à la première, respectivement à la deuxième trame de l'image numérique source, ainsi que décrit précédemment dans la description en liaison avec les figures 5a et 5b. Compte tenu du mode opératoire permettant de réaliser la première image progressive imap1 respectivement la deuxième image progressive imap2 par décalage d'un demi-pas dans la direction verticale à partir des premières trames T1 de l'image numérique source et de l'image numérique duale de l'image numérique source, respectivement des deux deuxièmes trames T2 de ces deux mêmes images, le module 43 de combinaison des pixels des deux images entrelacées précitées peut avantageusement être réalisé à partir de trois espaces mémoire, ou unités de mémorisation. La première unité de mémorisation reçoit les informations relatives

12

aux pixels de l'image numérique source au format entrelacé, la deuxième unité de mémorisation reçoit les valeurs des pixels relatifs à l'image duale au format entrelacé. La troisième unité de mémorisation reçoit par adressage en lecture-écriture, les valeurs des pixels des deux premières trames T1 de l'image numérique source et de l'image duale, selon un adressage successif approprié en lecture des première et deuxième unités de mémorisation précitées, respectivement les valeurs des pixels des deux deuxièmes trames T2 de ces deux mêmes images, selon une même procédure d'adressage en lecture des deux mêmes première et deuxième unités de mémorisation, pour constituer la première respectivement la deuxième image progressive, ainsi que décrit précédemment dans la description en liaison avec les figures 4a et 4b.

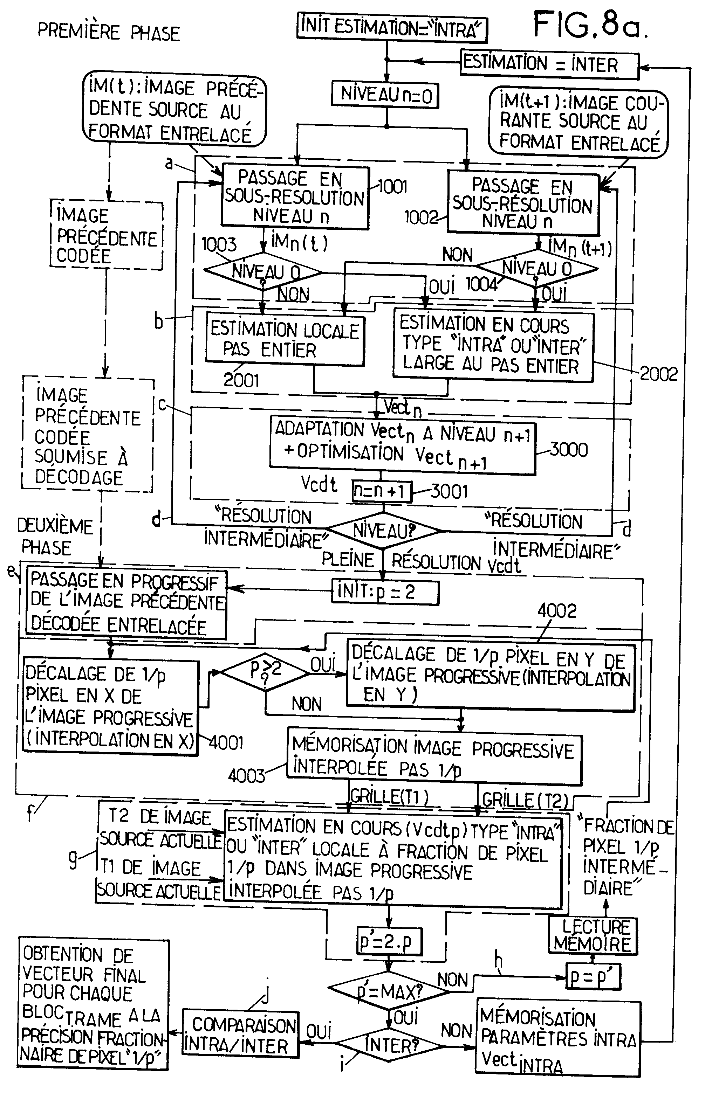

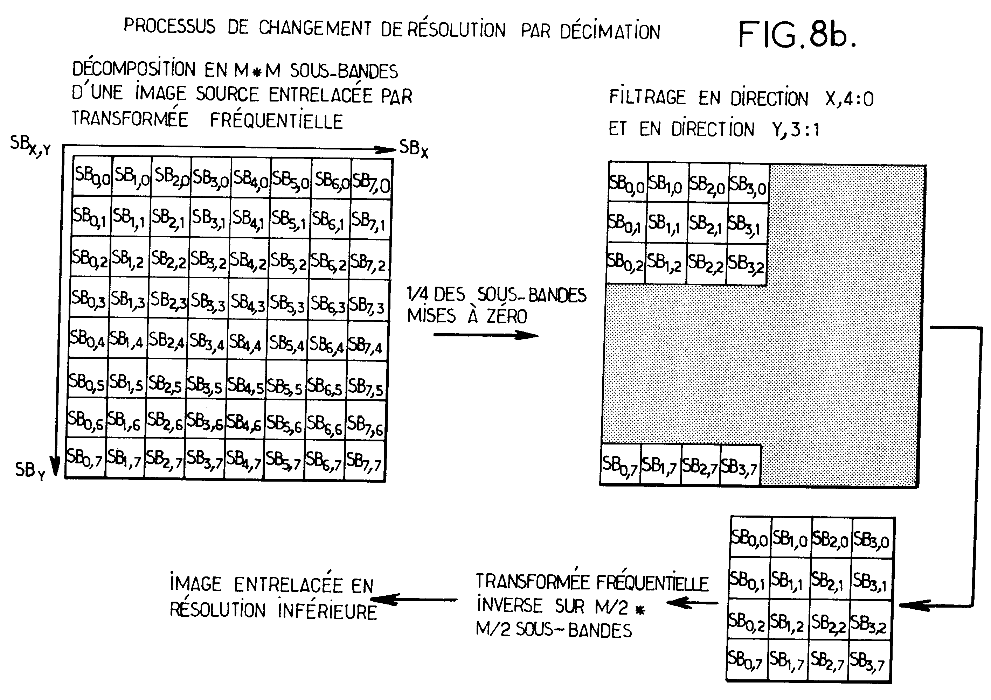

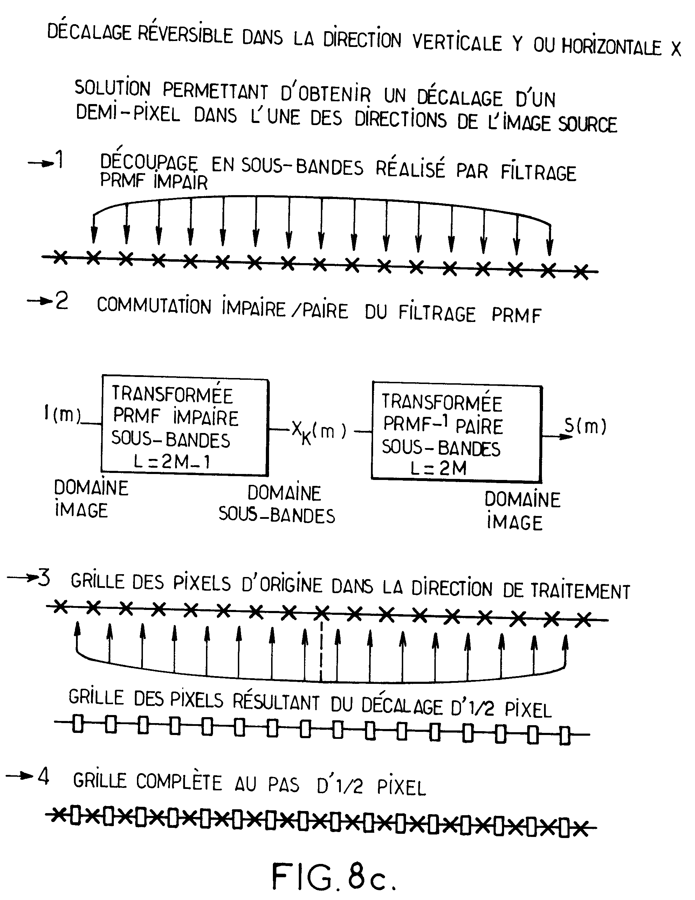

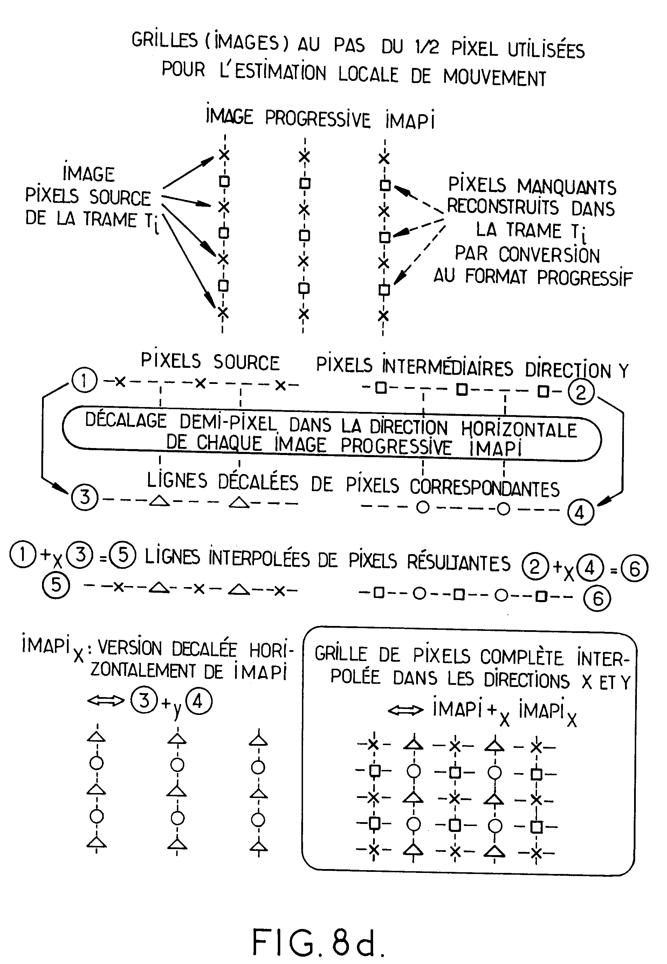

Une description plus détaillée d'un processus d'estimation de mouvement de type hiérarchique d'une séquence d'images de télévision sera maintenant donnée en liaison avec les figures 8a, 8b, 8c et 8d, ce processus correspondant à une application particulièrement avantageuse du procédé ou du dispositif de conversion d'une image numérique source de télévision du format entrelacé au format progressif, objets de l'invention, c'est-à-dire à une utilisation du procédé ou du dispositif de conversion précités.

Sur la figure 8a, on a représenté un organigramme général de l'application précitée, c'est-à-dire de l'utilisation du procédé de conversion de format entrelacé/progressif pour réaliser une estimation de mouvement entre images d'une séquence d'images de télévision.

Ainsi que représenté sur la figure 8a précitée, cette application, pour réaliser une estimation et une compensation de mouvement entre une image source courante et une image source précédente d'une séquence d'images de télévision codées sous forme d'un signal image numérique et présentant chacune une pleine résolution notée R, consiste, dans une première phase, à soumettre dans une étape a) les images sources courante et précédente, à un processus de changement de résolution pour engendrer une image source courante respectivement précédente de résolution inférieure, cette résolution étant notée $Rxq^n$ où $q \in ]\,0,1[$, n étant un entier positif ou nul, ainsi qu'il sera expliqué ultérieurement dans la description.

Sur la figure 8a, on indique que l'image précédente source au format entrelacé est référencée im(t) et l'image courante source au format entrelacé est référencée im(t+1).

Suite à une étape d'initialisation de l'estimation, cette étape étant représentée par le niveau n=0, le processus de changement de résolution est représenté à l'étape a) par les sous-étapes 1001 et 1002, pour chacune des images précédente respectivement courante précitées, les sous-étapes 1001, 1002 étant respectivement suivies d'un test sur le niveau de résolution des images considérées, test 1003 respectivement 1004 permettant d'accéder à l'étape suivante b) telle que représentée sur la figure 8a. En ce qui concerne l'étape a) relative au processus de changement de résolution, on indique par convention que, pour n=0, les images considérées sont l'image précédente source au format entrelacé et l'image courante source au format entrelacé en pleine résolution R. Pour n>0, les images considérées sont les images obtenues par passage en sous-résolution, par décimation, en fonction de la valeur du paramètre n, ainsi qu'il sera décrit ultérieurement dans la description.

Suite à l'étape a) précitée, l'application à un processus d'estimation de mouvement tel que représenté en figure 8a consiste à réaliser une étape b), laquelle consiste à effectuer une estimation de mouvement par blocs par comparaison des images courante et précédente de résolution inférieure, de même résolution, pour engendrer un ensemble de vecteurs mouvement intermédiaires représentatifs du mouvement entre blocs correspondants des images courante et précédente de résolution inférieure. Ainsi qu'indiqué en liaison avec l'étape a), on indique que, par convention, les les images courante et précédente de résolution inférieure comprennent les images de niveau n=0 en pleine résolution R.

L'étape b) précédemment mentionnée, estimation de mouvement par blocs, est elle-même suivie d'une étape c) consistant à établir, sur critère de choix, à partir de l'ensemble des vecteurs mouvement intermédiaires noté $vect_n$ un ensemble de vecteurs estimés, meilleure estimée du mouvement entre image source courante et précédente de résolution inférieure, de même résolution. L'étape c) précédente consiste par exemple en une étape d'adaptation de l'ensemble des vecteurs mouvement intermédiaires $vect_n$ selon une étape 3000 suivie d'une étape d'incrémentation du niveau de résolution 3001 au niveau de résolution inférieure représenté par n=n+1.

L'étape c) précédemment citée est elle-même suivie d'une étape de test sur le niveau de résolution. En réponse au test précité, et tant que la résolution la plus basse n'a pas été atteinte, cette résolution la plus basse étant définie à l'étape d'initialisation, l'étape c) précédemment mentionnée est alors suivie d'une étape d) consistant à effectuer une pluralité d'itérations de rang n+1 des étapes a) à c) précédemment décrites, à partir de l'image source courante et précédente et des vecteurs estimés, pour engendrer un ensemble de vecteurs mouvement candidats, notés $V_{cdt}$, représentatifs d'une estimation grossière du mouvement entre les images courante et précédente pleine résolution. Les vecteurs mouvement candidats sont notés $V_{cdt}$ et correspondent à une estimation grossière du mouvement entre image courante source im(t+1) et image précédente source im(t).

Ainsi qu'on l'a en outre représenté en figure 8a, l'application du procédé de conversion de format, objet de la présente invention, consiste en outre, pour effectuer l'estimation de mouvement, à réaliser une deuxième phase à partir de l'ensemble de vecteurs candidats représentatifs de l'estimation grossière du mouvement des images courante et précédente pleine résolution.

Ainsi que représenté sur la figure 8a précitée, la deuxième phase peut consister à réaliser une étape e), laquelle consiste à engendrer, à partir d'une image précédente décodée au format entrelacé, une image précédente décodée au format progressif, associée à chaque trame T1, T2 de l'image précédente source im(t).

De manière classique, on indique que le processus d'estimation de mouvement dans l'application considérée, est destiné à être utilisé dans un dispositif de codage d'images en vue de la transmission des images de télévision précitées. Les opérations nécessaires à l'obtention de l'image précédente décodée sont représentées en pointillés sur la figure 8a, ces opérations étant normalement mises en oeuvre au niveau du codeur mais ne faisant pas partie à proprement parler du processus d'estimation de mouvement, objet de la présente invention. Ainsi, l'image précédente décodée est obtenue à partir de l'image précédente source par une opération de codage réalisée en vue de la transmission et une opération de décodage, consécutive à l'opération de codage précitée, cette opération de décodage ayant pour objet de reconstituer une approximation de l'image précédente, nécessaire au niveau du décodeur, pour obtenir le décodage de l'image transmise.

Bien entendu, l'opération e) de passage au format progressif de l'image précédente décodée entrelacée est effectuée grâce à la mise en oeuvre du procédé de conversion de format, objet de la présente invention, précédemment décrit dans la description en liaison avec l'une des figures 3e ou 4b. On comprend bien sûr que l'étape e) précitée comporte également une phase d'initialisation permettant d'initialiser un paramètre de résolution p à une valeur 2 par exemple.

L'étape e) de la deuxième phase est alors suivie d'une étape f) consistant à engendrer, à partir de l'image précédente décodée au format progressif obtenue à l'issue de l'étape e), une première et une deuxième grille associée à la première trame T1 respectivement à la deuxième trame T2 de l'image précédente décodée entrelacée.

Ainsi qu'on l'a représenté sur la figure 8a, l'étape f) consiste par exemple, à partir de l'image précédente décodée entrelacée, l'opération de changement de format entrelacé/progressif ayant pour effet de provoquer un décalage d'un demi-pixel dans la trame dans le sens vertical ainsi que décrit précédemment dans la description, à effectuer une étape 4001 de décalage de 1/p pixel dans la direction horizontale de l'image progressive, ce décalage constituant une interpolation dans la direction horizontale de l'image, suivi en fonction de la valeur du paramètre p d'un décalage de 1/p pixel dans la direction verticale de l'image progressive pour effectuer une interpolation dans la direction verticale Y. Cette opération de décalage en Y est notée 4002 sur la figure 8a. Les deux opérations 4001 et 4002 permettent ainsi d'obtenir, à partir de l'image précédente décodée au format progressif dans les conditions précédemment décrites dans la description, les première et deuxième grilles synchronisées sur la trame T1 respectivement T2 de l'image précédente décodée entrelacée précitée, ces deux grilles étant mémorisées en une étape 4003 telle que décrite sur la figure 8a, ces grilles correspondant à des images progressives interpolées au pas 1/p, dans les directions verticale Y et horizontale X.

En ce qui concerne l'articulation entre les étapes e) et f) telles que représentées sur la figure 8a, on indique que, pour la valeur initiale p=2, le décalage de 1/p pixel en direction verticale Y de l'image progressive n'est pas nécessaire puisque celui-ci a été déjà réalisé à l'étape e) lors de la conversion de format de l'image précédente décodée entrelacée au format progressif, ainsi que décrit précédemment dans la description.

Enfin, l'application à l'estimation de mouvement, objet de la présente invention, telle que décrite en figure 8a, comprend une étape g) consistant à effectuer, à partir de la première et de la deuxième trame de l'image source courante et de la première et de la deuxième grille, une estimation de mouvement locale finale par prédiction de mouvement intra-trame et/ou inter-trame entre première trame et première grille, deuxième trame et deuxième grille, respectivement première trame et deuxième grille et deuxième trame et première grille.

On comprend bien sûr que l'étape g) précitée est effectuée dans l'image progressive interpolée de pas 1/p.

Ainsi qu'on l'a en outre représenté en figure 8a, l'opération g) est suivie d'une opération de test relativement à la résolution effective de chacune des grilles obtenues à l'issue de l'étape f). Tant que la résolution effective n'est pas égale à la résolution minimale, c'est-à-dire sur réponse négative au test p'=max, une itération représentée par l'étape h) est effectuée sur les étapes f) et g) précédemment décrites, ce qui permet d'obtenir les première et deuxième grilles par itérations successives et par décalages successifs au demi-pas pour obtenir un pas final p' égal à une fraction du pas initial, $p' = 2^{-m} \cdot p$ où m représente le nombre de passes successives de l'itération ainsi réalisée. On comprend ainsi que les vecteurs mouvement candidats permettent d'obtenir des vecteurs mouvement candidats finaux, lesquels peuvent avantageusement être discriminés de la façon ci-après.

L'étape g) peut être ainsi suivie d'un test sur la réalisation de l'estimation de mouvement intra ou inter-trame. De préférence, l'estimation intra-trame étant réalisée en premier, tant que l'estimation inter-trame n'est pas réalisée ainsi que représenté sur le test i) représenté en figure 8a, c'est-à-dire en réponse négative à ce test, une mémorisation des paramètres intra-trame peut être réalisée avec retour à l'étape d'initialisation de la première phase. Au contraire, lorsque l'estimation inter-trame est réalisée, une étape j) de comparaison entre les vecteurs mouvement intra/inter-trame peut être réalisée pour obtenir enfin le vecteur final pour chaque bloc de trame à la précision fractionnaire de pixel 1/p.

Une description de modes de réalisation particulièrement avantageux de certaines étapes de la première respectivement de la deuxième phase de l'application du procédé de conversion de format entrelacé/progressif, objet de la présente invention, à l'estimation de mouvement, sera maintenant donnée en liaison avec les figures 8b, 8c et 8d.

Sur la figure 8b, on a représenté un mode de réalisation particulier de l'étape a) de la première phase permettant de réaliser le processus de changement de résolution, par décimation.

Ainsi qu'on l'a représenté sur la figure 8b précitée, on indique que le processus de changement de résolution peut être réalisé en soumettant chaque image source courante et précédente à une transformée fréquentielle par décomposition en MxN sous-bandes de fréquences dans les directions horizontale et verticale de chaque image, pour engendrer un signal de spectre horizontal respectivement vertical représentatif dans chaque groupe de sous-bandes horizontale respectivement verticale du spectre de fréquences de l'image courante et de l'image précédente. Cette étape de décomposition en sous-bandes peut être réalisée de la même façon que précédemment décrit dans la description avec par exemple M=N. Cette étape de décomposition en sous-bandes est suivie d'une étape de filtrage et de recomposition sélective dans les directions horizontale et verticale des MxN sous-bandes de l'image source courante, respectivement de l'image source précédente par combinaison linéaire, pour engendrer pour chaque image source courante et précédente, un signal de spectre de fréquences filtré et recomposé comportant par exemple M'xN' sous-bandes avec M' $\leq$ M, N' $\leq$ N. Sur la figure 8b, on indique que le filtrage et la recomposition sélective en direction X est de la forme 4:0 et en direction Y de la forme 3:1. Un quart des sous-bandes de la décomposition MxM est ainsi mis à zéro, les sous-bandes totalement atténuées et non-utilisées étant représentées en grisé. Les sous-bandes restantes, celles situées en zone frontière avec les sous-bandes retirées pouvant être soumises à un filtrage en sous-bandes afin de limiter tout effet polluant lors du retour dans le domaine image, sont regroupées pour constituer un spectre de fréquences filtré et recomposé M'xN' et sont alors soumises à une transformée fréquentielle inverse, sur M/2.M/2 sous-bandes, dans le cas particulier de la figure 8b. Cette transformée fréquentielle inverse permet d'engendrer une image source courante et précédente basse-résolution, c'est-à-dire de résolution inférieure, ainsi que décrit précédemment dans la description. Les images précédente et courante ainsi obtenues sont des images entrelacées en résolution inférieure.

En ce qui concerne les étapes 2001 et 2002 permettant la mise en oeuvre de l'étape b) d'estimation de type intra ou inter-trame au pas entier, on indique que ces étapes sont normalement des étapes de type classique réalisées sur les images de résolution inférieure successives, au format entrelacé.

En ce qui concerne l'étape 3000 d'adaptation des vecteurs, on indique que cette étape consiste essentiellement à adapter le nombre de vecteurs et leur dimension aux images de résolution inférieure successives.

En ce qui concerne par contre l'étape f) permettant d'engendrer les grilles, première grille et deuxième grille synchronisées sur les trames T1, T2 de l'image précédente source, une solution particulièrement avantageuse, ainsi que représenté en figure 8c, consiste à engendrer un décalage réversible dans la direction verticale ou horizontale pour obtenir un décalage d'un demi-pixel dans l'une des directions de l'image source. Ainsi que représenté sur la figure 8c, on indique que les étapes 4001 et 4002 peuvent alors consister :

- en un découpage en sous-bandes réalisé par filtrage PRMF impair, c'est-à-dire au moyen d'un banc de filtres présentant un nombre impair de coefficients,

- en une commutation impaire/paire du filtrage PRMF précité,

- en une reconstruction dans le domaine image, par l'intermédiaire d'une transformée inverse paire, la grille des pixels d'origine dans la direction de traitement étant représentée sur la figure 8c précitée ainsi que la grille des pixels résultant du décalage d'un demi-pixel sur cette direction,

- la grille complète au pas d'un demi-pixel est obtenue par superposition de la grille des pixels d'origine dans la direction de traitement et de la grille des pixels résultant du décalage d'un demi-pixel dans cette même direction.

Le traitement ainsi réalisé est particulièrement avantageux dans la mesure où, à partir d'un signal image I(m) du domaine image, la transformée fréquentielle de type PRMF impair dans le domaine des sous-bandes engendre un signal $X_k(m)$ et la transformée PRMF inverse paire dans le domaine des sous-bandes réengendre dans le domaine image le signal S(m) qui, par superposition avec le signal I(m), permet de constituer la grille complète au pas d'un demi-pixel, ainsi que représenté en figure 8c.

La construction des grilles synchronisées sur les trames T1 et T2 de l'image précédente est réalisée à l'étape 4003 par mémorisation des grilles complètes au pas d'un demi-pixel tel que représenté en figure 8c, ainsi que représenté en figure 8d.

On a ainsi décrit un procédé et dispositif de conversion d'une image numérique de télévision du format entrelacé au format progressif particulièrement performant et leurs applications à l'estimation de mouvement entre images successives d'une séquence d'images de télévision. Le procédé et le dispositif, objets de la présente invention, sont particulièrement avantageux dans la mesure où, par simple manipulation opérée sur les sous-bandes suite à une décomposition en sous-bandes des signaux images, des processus très complexes tels que les processus d'estimation de mouvement peuvent être mis en oeuvre avec une fiabilité et une précision d'estimation de mouvement supplémentaires par rapport à celles des estimations de mouvement de type classique couramment utilisées ; d'autre part, le procédé et le dispositif, objets de la présente invention, sont également particulièrement avantageux dans la mesure où, pour les mêmes raisons, des processus de conversion de format entrelacé/progressif relativement simples peuvent être mis en oeuvre avec des résultats comparables avec des opérations de conversion classiques utilisées en studio de production toutefois beaucoup plus complexes, dès lors que le mouvement ne présente pas une trop forte amplitude.

**Revendications**

1. Procédé de conversion d'une image numérique source de télévision, constituée par les lignes entrelacées d'une première et d'une deuxième trame successives, du format entrelacé au format progressif, caractérisé en ce qu'il consiste à :

   a) effectuer un transformée fréquentielle par découpage en au moins un groupe de N sous-bandes de fréquences de ladite image numérique source, dans la direction verticale de cette image, de façon à engendrer, à partir des pixels constitutifs de ladite image numérique source, une pluralité de signaux numériques représentatifs, dans chaque groupe de sous-bandes dans la direction verticale, du spectre de fréquences de l'image numérique source ;

   b) effectuer en parallèle pour chaque groupe de sous-bandes dans la direction verticale, un filtrage haute-fréquence et un filtrage basse-fréquence desdits signaux numériques représentatifs du spectre de fréquences de l'image numérique source de façon à discriminer un signal numérique d'information spatiale, engendré par ledit filtrage basse-fréquence, et un signal numérique d'information temporelle, engendré par ledit filtrage haute-fréquence, le signal d'information spatiale étant représentatif de la structure de l'image numérique source dans la première et la deuxième trame et le signal d'information temporelle étant représentatif de l'évolution de cette structure de l'image numérique source dans l'intervalle de temps séparant la première et la deuxième trame ;

   c) effectuer par traitement fréquentiel, dans chaque sous-bande de fréquences de chaque groupe de sous-bandes dans la direction verticale, au moins une recomposition du spectre de fréquences de l'image numérique source par composition spectrale de la contribution de ladite évolution de la structure de l'image numérique source dans l'intervalle de temps séparant la première et la deuxième trame, pour engendrer un spectre de fréquences recomposé ;

   d) construire, suite audit traitement fréquentiel, à partir du spectre de fréquences recomposé, dans le domaine image ou fréquentiel, une image au format progressif associée à au moins chaque trame.

2. Procédé selon la revendication 1, caractérisé en ce que ladite transformée fréquentielle par découpage en au moins N sous-bandes est effectuée par filtrage par transformée orthogonale modulée (MOT).

3. Procédé selon la revendication 1 ou 2, caractérisé en ce que ladite étape c) consiste à effectuer ladite recomposition du spectre de fréquences de l'image numérique source pour une première et une deuxième image à format progressif associées chacune à la première respectivement la deuxième trame, ladite composition spectrale de la contribution de ladite évolution de la structure de l'image numérique source consistant à :

   -   affecter ledit signal numérique d'information spatiale, engendré par ledit filtrage basse-fréquence, à la demi-somme des spectres de fréquences de la première et de la deuxième image à format progressif, pour engendrer un premier spectre de fréquences intermédiaire représentatif de la structure de la première ou de la deuxième image au format progressif ;

   -   inverser fréquentiellement le spectre du signal numérique d'information temporelle engendré par ledit filtrage haute-fréquence, pour engendrer un signal numérique d'information temporelle inversé fréquentiellement ;

   -   affecter ledit signal numérique d'information temporelle inversé fréquentiellement à la demi-différence des spectres de fréquences de la première et de la deuxième image au format progressif, pour engendrer un deuxième spectre de fréquences intermédiaire représentatif de l'évolution de la première image au format progressif associé à la première trame en la deuxième image à format progressif associée à la deuxième trame ;

   -   recomposer un premier spectre de fréquences résultant représentatif de la première image au format progressif par combinaison linéaire du premier et du deuxième spectre de fréquences intermédiaire ;

- recomposer un deuxième spectre de fréquences résultant représentatif de la deuxième image au format progressif par combinaison linéaire du premier et du deuxième spectre de fréquences intermédiaire, lesdits premier et deuxième spectres de fréquences résultants formant ledit spectre de fréquences recomposé.

4. Procédé selon la revendication 3, caractérisé en ce que ladite combinaison linéaire permettant de recomposer ledit premier spectre de fréquences résultant est formée par la différence du premier et du deuxième spectre de fréquences intermédiaire et en ce que ladite combinaison linéaire permettant de recomposer ledit deuxième spectre de fréquences résultant est formé par la somme du premier et du deuxième spectre de fréquences intermédiaire.

5. Procédé selon la revendication 1 ou 2, caractérisé en ce que ladite étape c) consistant à effectuer ladite recomposition du spectre de fréquences de l'image numérique source consiste :
    - à composer dans le domaine fréquentiel pour chacun des groupes de sous-bandes dans la direction verticale, un spectre de fréquences résultant représentatif d'une imagé duale entrelacée de ladite image numérique source entrelacée, ledit spectre de fréquences résultant étant obtenu par différence dudit signal numérique d'information spatiale, engendré par ledit filtrage basse-fréquence, et dudit signal numérique d'information temporelle, engendré par ledit filtrage haute-fréquence et représentatif de ladite image numérique duale de l'image numérique source entrelacée obtenue par interpolation de chaque trame constitutive de l'image numérique source d'origine.

6. Procédé selon la revendication 5, caractérisé en ce que l'étape d) consiste en outre :

    - à effectuer une transformée fréquentielle inverse du spectre de fréquences résultant représentatif de l'image duale entrelacée, pour engendrer ladite image duale numérique entrelacée dans le domaine image,

    - à reconstruire, à partir de l'image numérique source entrelacée et de l'image numérique duale entrelacée, par décalage de position d'un demi-pixel suivant la direction verticale, une image au format progressif associée à chacune des première et deuxième trames.

7. Procédé selon l'une des revendications 1 à 6, caractérisé en ce que, pour une transformée fréquentielle par découpage en MxN bandes de fréquences de l'image numérique source, N bandes de fréquences selon la direction verticale et M bandes selon la direction horizontale de cette image, constituant M groupes de N bandes de fréquences, ledit filtrage basse et haute fréquence est un filtrage de type adaptatif réalisé suivant un critère de décision de détection spatio-temporelle du contenu inter- et/ou intra-images numériques sources entrelacées.

8. Dispositif de filtrage d'un signal numérique présentant un spectre de fréquences S selon un gabarit de filtrage global G, sur le domaine de fréquences du spectre de fréquences S, caractérisé en ce que celui-ci comprend :

    - des moyens de transformée fréquentielle dudit signal numérique en un nombre N de sous-bandes verticales adjacentes successives couvrant le spectre de fréquences S dudit signal numérique,

    - des moyens de filtrage formés par une pluralité de filtres élémentaires pour chaque sous-bande, chaque filtre élémentaire étant formé par la combinaison d'un filtre passe-bas et d'un filtre passe-haut pondérés chacun par la valeur limite inférieure respectivement supérieure d'atténuation du filtrage global G au voisinage de la limite inférieure et supérieure de la sous-bande correspondante.

9. Dispositif selon la revendication 8, caractérisé en ce que le filtre passe-bas est un filtre du type (1/p, 1/q, 1/p) et le filtre passe-haut un filtre du type (-1/r, 1/s, -1/r), p, q, r, s entier > 1.

10. Dispositif de conversion d'une image numérique source de télévision, constituée par les lignes entrelacées d'une première et d'une deuxième trame successives, du format entrelacé au format progressif, caractérisé en ce qu'il comporte au moins :

    a) des moyens de transformée fréquentielle par découpage en au moins un groupe de N sous-bandes de fréquences de ladite image numérique source, dans la direction verticale de cette image, de façon à engendrer, à partir de pixels constitutifs de ladite image numérique source, une pluralité de signaux numériques représentatifs, dans chaque groupe de sous-bandes dans la direction verticale, du spectre de fréquences de l'image numérique source ;

b) des moyens de filtrage haute-fréquence et basse-fréquence desdits signaux numériques représentatifs, pour chaque groupe de sous-bandes dans la direction verticale, du spectre de fréquences de l'image numérique source de façon à discriminer un signal numérique d'information spatiale, engendré par ledit filtrage basse-fréquence, et un signal numérique d'information temporelle, engendré par ledit filtrage haute-fréquence, le signal d'information spatiale étant représentatif de la structure de l'image numérique source dans la première et la deuxième trame et le signal d'information temporelle étant représentatif de l'évolution de cette structure de l'image numérique source dans l'intervalle de temps séparant la première et la deuxième trame ;

c) des moyens de recomposition spectrale du spectre de fréquences de l'image numérique source par traitement fréquentiel dans chaque sous-bande de fréquences de chaque groupe de sous-bandes dans la direction verticale, permettant, par composition spectrale de la contribution de ladite évolution de la structure de l'image numérique source dans l'intervalle de temps séparant la première et la deuxième trame, d'engendrer un spectre de fréquences recomposé ;

d) des moyens de reconstruction dans le domaine image ou fréquentiel, à partir du spectre de fréquences recomposé, d'une image au format progressif associée à au moins chaque trame.

11. Dispositif selon la revendication 10, caractérisé en ce que lesdits moyens de transformée fréquentielle comportent :

- des moyens de commutation recevant sur une entrée un signal d'image source entrelacée représentatif de ladite image numérique source entrelacée de télévision et délivrant, sur commutation sur critère de choix de mode de filtrage adaptatif ou non-adaptatif, ledit signal d'image source sur une première respectivement deuxième borne de sortie ;

- des circuits de filtrage par transformée orthogonale modulée (MOT) recevant ledit signal image source délivré par l'une des bornes de sortie et permettant d'effectuer le découpage en sous-bandes de fréquences, en au moins un groupe de N sous-bandes verticales de fréquences et délivrant un signal numérique représentatif du spectre de fréquences de l'image numérique source ;

- des moyens de calcul d'un critère de décision sur le gabarit de filtrage des moyens de filtrage haute-fréquence et basse-fréquence, en fonction du mode adaptatif ou non-adaptatif choisi, recevant un signal représentatif de la répartition de l'énergie du spectre de fréquences en sous-bandes de fréquences et délivrant un signal de commande desdits moyens de filtrage haute-fréquence et basse-fréquence.

12. Dispositif selon la revendication 10 ou 11, caractérisé en ce que lesdits moyens de filtrage haute-fréquence et basse-fréquence comportent :
    - un premier module de filtrage basse-fréquence et un deuxième module de filtrage haute-fréquence recevant en parallèle ledit signal numérique représentatif du spectre de fréquences de l'image numérique source entrelacée, lesdits premier et deuxième modules de filtrage recevant sur une entrée de commande ledit signal de commande des moyens de filtrage haute et basse fréquence.

13. Dispositif selon l'une des revendications 10, 11 ou 12, caractérisé en ce que, dans le cas d'une reconstruction des images au format progressif dans le domaine fréquentiel, lesdits moyens de recomposition spectrale du spectre de fréquences de l'image numérique source par traitement fréquentiel comprennent :

- un module d'inversion fréquentielle recevant ledit signal numérique d'information temporelle délivré par ledit deuxième module de filtrage haute-fréquence et délivrant un signal numérique d'information temporelle inversé, ramené dans le domaine basse-fréquence,

- un premier module soustracteur recevant le signal numérique d'information spatiale délivré par le premier module de filtrage basse-fréquence et, sur une entrée de soustraction, ledit signal numérique d'information temporelle inversé, délivré par le circuit d'inversion fréquentielle et délivrant un signal numérique représentatif du spectre de fréquences de la première image au format progressif,

- un deuxième module sommateur recevant ledit signal numérique d'information spatiale délivré par le premier module de filtrage basse-fréquence et ledit signal numérique d'information temporelle inversé délivré par le circuit d'inversion fréquentielle et délivrant un signal numérique représentatif du spectre de fréquences de la deuxième image au format progressif.

**14.** Dispositif selon les revendications 10 et 13, caractérisé en ce que les moyens de reconstruction dans le domaine fréquentiel d'une image au format progressif associée à au moins chaque trame comportent au moins un module de transformée fréquentielle inverse commandé en fonction du mode de filtrage adaptatif ou non-adaptatif choisi, ledit module de transformée fréquentielle inverse délivrant à partir de signaux numériques représentatifs du spectre de fréquences recomposé, formé par le signal numérique représentatif du spectre de fréquences de la première respectivement de la deuxième image au format progressif, lesdites première et deuxième images au format progressif.

**15.** Dispositif selon l'une des revendications 10, 11 ou 12, caractérisé en ce que, dans le cas d'une reconstruction des images progressives dans le domaine image, lesdits moyens de recomposition spectrale du spectre de fréquences de l'image numérique source par traitement fréquentiel comprennent au moins un module soustracteur recevant le signal numérique d'information spatiale délivré par le premier module de filtrage basse-fréquence, et, sur une entrée de soustraction, ledit signal numérique d'information temporelle, et délivrant un signal représentatif du spectre de fréquences d'une image duale entrelacée de l'image numérique source au format entrelacé.

**16.** Dispositif selon les revendications 10 et 15, caractérisé en ce que les moyens de reconstruction dans le domaine image d'une image au format progressif associée à au moins chaque trame comportent :

- un module de transformée fréquentielle inverse, commandé en fonction du mode de filtrage adaptatif ou non-adaptatif choisi, ledit module recevant ledit signal représentatif du spectre de fréquences de l'image duale et délivrant, dans le domaine image, un signal représentatif de l'image duale numérique au format entrelacé ;

- un circuit de combinaison de pixels, recevant ledit signal numérique représentatif de l'image numérique source, au format entrelacé, et ledit signal représentatif de l'image numérique duale au format entrelacé, et permettant par combinaison des pixels des deux images, de délivrer une première et une deuxième image progressive associée à la première respectivement deuxième trame de l'image numérique source.

**17.** Utilisation d'un procédé de conversion d'une image numérique de télévision du format entrelacé au format progressif, selon l'une des revendications 1 à 7, pour réaliser une estimation et une compensation de mouvement entre une image source courante et une image source précédente d'une séquence d'images de télévision, lesdites images sources au format entrelacé étant constituées chacune par une première et une deuxième trame codées sous forme d'un signal image numérique, et présentant une pleine résolution R, caractérisé en ce qu'elle consiste, dans une première phase :

a) - à soumettre lesdites images sources courante et précédente à un processus de changement de résolution pour engendrer une image source courante respectivement précédente de résolution inférieure, $Rxq^n$, $q \in ] 0,1[$, n entier positif ou nul ;

b) - à effectuer une estimation de mouvement par blocs par comparaison des images courante et précédente de résolution inférieure pour engendrer un ensemble de vecteurs mouvement intermédiaires représentatifs du mouvement entre blocs correspondants des images courante et précédente de résolution inférieure ;

c) - à établir, sur critère de choix, à partir de l'ensemble des vecteurs mouvement intermédiaires, un ensemble de vecteurs estimés, meilleure estimée du mouvement entre image source courante et précédente de résolution inférieure ;

d) - à effectuer une pluralité d'itérations de rang n+1 des étapes a) à c) à partir de l'image source courante et précédente et desdits vecteurs estimés, pour engendrer un ensemble de vecteurs mouvement candidats représentatifs d'une estimation grossière du mouvement des images courante et précédente pleine résolution, et, dans une deuxième phase finale :

e) - à engendrer, à partir de l'image précédente décodée au format entrelacé, une image précédente décodée au format progressif, associée à chaque trame (T1, T2) ;

f) - à engendrer, à partir de l'image précédente décodée au format progressif, une première et une deuxième grille associées respectivement à la première respectivement deuxième trame, la première et la deuxième grille étant formées chacune par une image progressive synchronisée sur ladite première respectivement deuxième trame de l'image précédente décodée ;

g) - à effectuer, à partir de la première et de la deuxième trame de l'image source courante et de la première et de la deuxième grille, une estimation de mouvement locale finale par prédiction de mouvement intra-trame et inter-trame entre première trame et première grille, deuxième trame et deuxième grille, respectivement première trame et deuxième grille et deuxième trame et première grille.

**18.** Utilisation selon la revendication 17, caractérisée en ce que les première et deuxième grilles sont obtenues par itération des étapes f) et g) par décalages successifs au demi-pas, ce qui permet d'obtenir un pas final p' égal à une fraction du pas initial $p'=2^{-m}.p$, où m représente le nombre de passes successives de ladite itération.

FIG.1a.
IMAGE AU FORMAT ENTRELACÉ

FIG.1b.
IMAGES AU FORMAT PROGRESSIF

FIG.3a.

| SBx →<br>SBy ↓ G0 | G1 | G2 | | | GM−1 |
|---|---|---|---|---|---|
| SB 0,0 | SB 1,0 | SB 2,0 | | | SB M−1,0 |
| SB 0,1 | | | | | |
| SB 0,2 | | | | | |
| SB 0,3 | | | | | |
| SB 0,4 | | | | | |
| SB 0,5 | | | | | |
| SB 0,6 | | | | | |
| SB 0,7 | | | | | |
| SB 0,N−2 | | | | | |
| SB 0,N−1 | | | | | |

IMAGE NUMÉRIQUE
SOURCE DU
FORMAT ENTRELACÉ
TRAME T₁, T₂

TRANSFORMÉE FRÉQUENTIELLE
DÉCOUPAGE EN
M×N SOUS-BANDES
M GROUPES DE SOUS-BANDES
DE N SOUS-BANDES
DANS LA DIRECTION VERTICALE — A

FILTRAGE HAUTE FRÉQUENCE HF
ET FILTRAGE BASSE FRÉQUENCE BF — B
DE CHAQUE GROUPE DE
SOUS-BANDES, ⟶
INFORMATION TEMPORELLE HF
INFORMATION SPATIALE BF

RECOMPOSITION DU SPECTRE
IMAGE NUMÉRIQUE SOURCE
PAR COMPOSITION SPECTRALE — C
HF.
⟶ SPECTRE DE FRÉQUENCES
RECOMPOSÉ

CONSTRUCTION DANS LE
DOMAINE IMAGE OU
FRÉQUENTIEL D'UNE IMAGE — D
AU FORMAT PROGRESSIF ASSOCIÉE
À AU MOINS CHAQUE TRAME
T₁, T₂

DEUX IMAGES I₁, I₂
AU FORMAT PROGRESSIF
ASSOCIÉES CHACUNE
À UNE TRAME T₁, T₂

FIG.2.

FIG.3b.

REPRÉSENTATION PARTIE BF DE
imay
(FILTRAGE PB DE imay )

$F_y$

| SB$_7$ |
| SB$_6$ |
| SB$_5$ |
| SB$_4$ |
| SB$_3$ |
| SB$_2$ |
| SB$_1$ |
| SB$_0$ |

0        1/2 SOMME        1

# FIG.3c.

REPRÉSENTATION PARTIE HF RAMENÉE
EN BF:
(INVERSION FRÉQUENTIELLE DU FILTRAGE
PH DE imay )

$F_y$

| SB$_7$ |
| SB$_6$ | HF |
| SB$_5$ |
| SB$_4$ |
$f_0$
| SB$_3$ |
| SB$_2$ | $\overline{HF}$ |
| SB$_1$ |
| SB$_0$ |

0        1/2 DIFFÉRERENCE        1

IMAGE PROGRESSIVE CADRÉE SUR LA TRAME T1

IMAP1=T1(imay) ET SES POINTS CONSTRUITS EN
POSITIONS INTERMÉDIAIRES 1/2 PAS
⟺ VERSION INTERPOLÉE EN Y DE T1(imay)
IMAGE PROGRESSIVE LA PLUS ANTÉRIEURE⟹ ⊖

imap 1

T1:(×)

POINTS CONSTRUITS
DANS T1 : (□)

T1        T2

$F_y$

| SB$_7$ |
| SB$_6$ |
| SB$_5$ |
| SB$_4$ | BF |
$f_0$
| SB$_3$ |
| SB$_2$ | ⊕ |
| SB$_1$ |
| SB$_0$ |

$\overline{HF}$        ⊖

-1        0        1

# FIG.3d. PREMIÈRE IMAGE PROGRESSIVE

→ <u>IMAGE PROGRESSIVE CADRÉE SUR LA TRAME T2</u>

IMAP2 = T2(IMAY) ET SES POINTS CONSTRUITS EN POSITIONS INTERMÉDIAIRES 1/2 PAS

⇔ VERSION INTERPOLÉE EN Y DE T2 (IMAY)

IMAGE PROGRESSIVE LA PLUS "RÉCENTE" ⇒ ⊕

imap 2

POINTS CONSTRUITS DANS T2 : (O)

T2 : (x)

T1    T2

FIG.3e. DEUXIÈME IMAGE PROGRESSIVE

SPECTRE EN SOUS-BANDES VERTICALES DE imay

SPECTRE EN SOUS-BANDES VERTICALES DE imay'

FIG.4a. IMAGE DUALE ENTRELACÉE

imap 1    imap 2

IMAGE NUMÉRIQUE
SOURCE

IMAGE DUALE

FIG.4b.

FRÉQUENCES CROISSANTES EN X

BF$_X$    HF$_X$

BF$_Y$

FRÉQUENCES CROISSANTES Y

MVT INTER-TRAME

SPATIAL PRÉDOMINANT

POINT DE
COUPURE

MVT INTER-TRAME IMPORTANT

SPATIAL
PRÉDOMINANT

HF$_Y$

ENERGIE EN
SOUS_BANDES

0                E$_{MAX}$

FIG.5.

FIG.6a.

PRISE EN COMPTE DE L'INVERSION FRÉQUENTIELLE DES $SB_{2n+1}$

FIG.6b.

FIG.6c.

FIG. 7a.

EP 0 702 488 A1

IMAGE
SOURCE
FORMAT
ENTRELACÉ

**10** MODE ADAPTATIF?

NON (FIXE) → **11** TRANSFORMATION EN N SOUS-BANDES VERTICALES

OUI (ADAPTATIF) → **12** TRANSFORMATION EN M*N SOUS-BANDES

**13** CALCUL DU CRITÈRE DE DÉCISION SUR GABARIT DE FILTRAGE

**1**

SPECTRE EN SOUS-BANDES

**2**

**20** FILTRAGE HF → INFO TEMPORELLE

**21** FILTRAGE BF → INFO SPATIALE

**3**

**31** +/− → SPECTRE IMAGE DUALE

**32** +/+ → SPECTRE IMAGE SOURCE ENTRELACÉE

IMAGE ENTRELACÉE

TYPE DE MODE FIXE /ADAPTATIF → **41** TRANSFORMATION INVERSE FONCTION DU MODE

**4**

**43** COMBINAISON DES PIXELS DES DEUX IMAGES ENTRELACÉES

PREMIÈRE IMAGE PROGRESSIVE

SECONDE IMAGE PROGRESSIVE

FIG.7b.

FIG.8a.

PREMIÈRE PHASE

INIT ESTIMATION="INTRA"

ESTIMATION = INTER

NIVEAU n=0

IM(t):IMAGE PRÉCÉDENTE SOURCE AU FORMAT ENTRELACÉ

IM(t+1):IMAGE COURANTE SOURCE AU FORMAT ENTRELACÉ

IMAGE PRÉCÉDENTE CODÉE

a

PASSAGE EN SOUS-RESOLUTION NIVEAU n  1001

PASSAGE EN SOUS-RÉSOLUTION NIVEAU n  1002

1003  $IM_n(t)$

$IM_n(t+1)$

NIVEAU 0  1004  NIVEAU 0  NON

NON  OUI  OUI

b

ESTIMATION LOCALE PAS ENTIER  2001

ESTIMATION EN COURS TYPE "INTRA" OU"INTER" LARGE AU PAS ENTIER  2002

IMAGE PRÉCÉDENTE CODÉE SOUMISE À DÉCODAGE

c

$Vect_n$

ADAPTATION $Vect_n$ A NIVEAU n+1 + OPTIMISATION $Vect_{n+1}$  3000

Vcdt  n=n+1  3001

DEUXIÈME PHASE

d

"RÉSOLUTION INTERMÉDIAIRE"  NIVEAU?  "RÉSOLUTION INTERMÉDIAIRE"  d

PLEINE RÉSOLUTION Vcdt

INIT: p = 2

e

PASSAGE EN PROGRESSIF DE L'IMAGE PRÉCÉDENTE DÉCODÉE ENTRELACÉE

4002

DÉCALAGE DE 1/p PIXEL EN Y DE L'IMAGE PROGRESSIVE(INTERPOLATION EN Y)

P>2 ?  OUI

NON

DÉCALAGE DE 1/p PIXEL EN X DE L'IMAGE PROGRESSIVE (INTERPOLATION EN X)  4001

MÉMORISATION IMAGE PROGRESSIVE INTERPOLÉE PAS 1/p  4003

f

GRILLE(T1)  GRILLE(T2)

T2 DE IMAGE SOURCE ACTUELLE

g  T1 DE IMAGE SOURCE ACTUELLE

ESTIMATION EN COURS (Vcdtp) TYPE "INTRA" OU "INTER" LOCALE À FRACTION DE PIXEL 1/p DANS IMAGE PROGRESSIVE INTERPOLÉE PAS 1/p

"FRACTION DE PIXEL 1/p INTERMÉDIAIRE"

LECTURE MÉMOIRE

p'=2.p

h  p=p'

OBTENTION DE VECTEUR FINAL POUR CHAQUE BLOC TRAME A LA PRÉCISION FRACTIONNAIRE DE PIXEL "1/p"

j

COMPARAISON INTRA/INTER  OUI

p'=MAX?  NON

OUI

INTER?  NON

MÉMORISATION PARAMÈTRES INTRA $Vect_{INTRA}$

i

PROCESSUS DE CHANGEMENT DE RÉSOLUTION PAR DÉCIMATION

FIG.8b.

DÉCOMPOSITION EN M*M SOUS-BANDES
D'UNE IMAGE SOURCE ENTRELACÉE PAR
TRANSFORMÉE FRÉQUENTIELLE

FILTRAGE EN DIRECTION X,4:0
ET EN DIRECTION Y,3:1

$SB_{X,Y}$ → $SB_X$

| $SB_{0,0}$ | $SB_{1,0}$ | $SB_{2,0}$ | $SB_{3,0}$ | $SB_{4,0}$ | $SB_{5,0}$ | $SB_{6,0}$ | $SB_{7,0}$ |
| $SB_{0,1}$ | $SB_{1,1}$ | $SB_{2,1}$ | $SB_{3,1}$ | $SB_{4,1}$ | $SB_{5,1}$ | $SB_{6,1}$ | $SB_{7,1}$ |
| $SB_{0,2}$ | $SB_{1,2}$ | $SB_{2,2}$ | $SB_{3,2}$ | $SB_{4,2}$ | $SB_{5,2}$ | $SB_{6,2}$ | $SB_{7,2}$ |
| $SB_{0,3}$ | $SB_{1,3}$ | $SB_{2,3}$ | $SB_{3,3}$ | $SB_{4,3}$ | $SB_{5,3}$ | $SB_{6,3}$ | $SB_{7,3}$ |
| $SB_{0,4}$ | $SB_{1,4}$ | $SB_{2,4}$ | $SB_{3,4}$ | $SB_{4,4}$ | $SB_{5,4}$ | $SB_{6,4}$ | $SB_{7,4}$ |
| $SB_{0,5}$ | $SB_{1,5}$ | $SB_{2,5}$ | $SB_{3,5}$ | $SB_{4,5}$ | $SB_{5,5}$ | $SB_{6,5}$ | $SB_{7,5}$ |
| $SB_{0,6}$ | $SB_{1,6}$ | $SB_{2,6}$ | $SB_{3,6}$ | $SB_{4,6}$ | $SB_{5,6}$ | $SB_{6,6}$ | $SB_{7,6}$ |
| $SB_{0,7}$ | $SB_{1,7}$ | $SB_{2,7}$ | $SB_{3,7}$ | $SB_{4,7}$ | $SB_{5,7}$ | $SB_{6,7}$ | $SB_{7,7}$ |

$SB_Y$

1/4 DES SOUS-BANDES
MISES À ZÉRO →

| $SB_{0,0}$ | $SB_{1,0}$ | $SB_{2,0}$ | $SB_{3,0}$ |
| $SB_{0,1}$ | $SB_{1,1}$ | $SB_{2,1}$ | $SB_{3,1}$ |
| $SB_{0,2}$ | $SB_{1,2}$ | $SB_{2,2}$ | $SB_{3,2}$ |
| $SB_{0,7}$ | $SB_{1,7}$ | $SB_{2,7}$ | $SB_{3,7}$ |

IMAGE ENTRELACÉE EN
RÉSOLUTION INFÉRIEURE ←

TRANSFORMÉE FRÉQUENTIELLE
INVERSE SUR M/2 *
M/2 SOUS-BANDES ←

| $SB_{0,0}$ | $SB_{1,0}$ | $SB_{2,0}$ | $SB_{3,0}$ |
| $SB_{0,1}$ | $SB_{1,1}$ | $SB_{2,1}$ | $SB_{3,1}$ |
| $SB_{0,2}$ | $SB_{1,2}$ | $SB_{2,2}$ | $SB_{3,2}$ |
| $SB_{0,7}$ | $SB_{1,7}$ | $SB_{2,7}$ | $SB_{3,7}$ |

DÉCALAGE RÉVERSIBLE DANS LA DIRECTION VERTICALE Y OU HORIZONTALE X

SOLUTION PERMETTANT D'OBTENIR UN DÉCALAGE D'UN
DEMI-PIXEL DANS L'UNE DES DIRECTIONS DE L'IMAGE SOURCE

→1  DÉCOUPAGE EN SOUS-BANDES RÉALISÉ PAR FILTRAGE
PRMF IMPAIR

→2  COMMUTATION IMPAIRE/PAIRE DU FILTRAGE PRMF

$I(m)$ →

| TRANSFORMÉE PRMF IMPAIRE SOUS-BANDES $L = 2M-1$ |

$-X_K(m)-$

| TRANSFORMÉE PRMF-1 PAIRE SOUS-BANDES $L = 2M$ |

$S(m)$ →

DOMAINE IMAGE

DOMAINE SOUS-BANDES

DOMAINE IMAGE

→3  GRILLE DES PIXELS D'ORIGINE DANS LA DIRECTION DE TRAITEMENT

GRILLE DES PIXELS RÉSULTANT DU DÉCALAGE D'1/2 PIXEL

→4  GRILLE COMPLÈTE AU PAS D'1/2 PIXEL

# FIG.8c.

GRILLES (IMAGES) AU PAS DU 1/2 PIXEL UTILISÉES
POUR L'ESTIMATION LOCALE DE MOUVEMENT

IMAGE PROGRESSIVE IMAPi

IMAGE
PIXELS SOURCE
DE LA TRAME T$_i$

PIXELS MANQUANTS
RECONSTRUITS DANS
LA TRAME T$_i$
PAR CONVERSION
AU FORMAT PROGRESSIF

PIXELS SOURCE    PIXELS INTERMÉDIAIRES DIRECTION Y

① —x— —,— —x— —,— —x—        —□— —,— —□— —,— —□— ②

DÉCALAGE DEMI-PIXEL DANS LA DIRECTION HORIZONTALE
DE CHAQUE IMAGE PROGRESSIVE IMAPi

LIGNES DÉCALÉES DE PIXELS CORRESPONDANTES

③ — —△— — —△— —        — — —○— — —○— — — ④

①+$_X$③ =⑤ LIGNES INTERPOLÉES DE PIXELS RÉSULTANTES ②+$_X$④ =⑥

⑤ — —x— —△— —x— —△— —x—        —□— —○— —□— —○— —□— — ⑥

IMAPi$_X$ : VERSION DECALÉE HORI-
ZONTALEMENT DE IMAPi

⟺ ③+$_y$④

GRILLE DE PIXELS COMPLÈTE INTER-
POLÉE DANS LES DIRECTIONS X ET Y

⟺ IMAPi+$_X$ IMAPi$_X$

FIG. 8d.

Office européen
des brevets

**RAPPORT DE RECHERCHE EUROPEENNE**

Numero de la demande

EP 95 40 2087

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 586 262 (KABUSHIKI KAISHA TOSHIBA) <br> * abrégé * <br> * colonne 3, ligne 10 - colonne 4, ligne 11 * <br> * colonne 5, ligne 5 - colonne 7, ligne 33; figures 2-4 * <br> --- | 1,3,8,10 | H04N5/44 |
| A | GB-A-2 251 756 (SONY BROADCAST & COMMUNICATIONS LTD.) <br> * page 3, ligne 26 - page 5, ligne 36 * <br> * page 10, ligne 20 - page 12, ligne 32; figures 1-3,17 * <br> --- | 1,8,10 | |
| A | EP-A-0 595 710 (FRANCE TELECOM) <br> --- | | |
| A | EP-A-0 531 242 (FRANCE TELECOM) <br> ----- | | |

| | | | DOMAINES TECHNIQUES RECHERCHES (Int.Cl.6) |
|---|---|---|---|
| | | | H04N |

Le présent rapport a été établi pour toutes les revendications

| Lieu de la recherche | Date d'achèvement de la recherche | Examinateur |
|---|---|---|
| LA HAYE | 2 Novembre 1995 | Fuchs, P |